# EUROPEAN PATENT APPLICATION

(11) **EP 4 834 641 A1**
(43) Date of publication of application: **04.11.2026**
(21) Application number: 25173137.8
(22) Date of filing: 29.04.2025
(51) Int. Cl.: B60L 3/00, B60L 58/13, B60L 58/22

(54) **BALANCING STATE-OF-CHARGE (SOC) IN A BATTERY(IES) IN AN ELECTRIC VEHICLE (EV) THROUGH AN ON-BOARD BATTERY MANAGEMENT SYSTEM**

(71) Applicant: Volvo Truck Corporation, 405 08 Göteborg (SE)
(72) Inventor: ÖSTMAN, Bill, 436 57 HOVÅS (SE); ÖJERGREN, Johan, 442 37 KUNGÄLV (SE)
(74) Representative: Kransell & Wennborg KB

(57) **Abstract**

Balancing state-of-charge (SOC) in a battery(ies) in an electric vehicle (EV) through an on-board battery management system (BMS) in the EV. The on-board BMS is configured to be placed in an SOC service mode to provide on-board charging of an installed batteries of the EV battery from power received from an external charging station to a target SOC. In the SOC service mode, the on-board BMS is configured to provide on-board charging/discharging of an installed batteries using components present in the EV battery system that perform normal on-board charging/discharging of a fully installed EV battery during normal use. The on-board BMS can be used to charge/discharge all or only a subset of installed batteries of the EV battery. In this manner, installed batteries do not have to be removed and manually charged/discharged to the target SOC before additional batteries at the target SOC are installed for SOC balance.

## Description

### TECHNICAL FIELD

The disclosure relates generally to battery systems in electric vehicles (EVs), including battery EVs (BEVs) and hybrid EVs (HEVs), and in more particular aspects, the disclosure relates to balancing state-of-charge (SOC) in a battery(ies) in an EV through an on-board battery management system.

### BACKGROUND

Electric vehicles (EVs) are automobiles powered by electric motors instead of internal combustion engines. EVs rely on energy stored in rechargeable batteries or fuel cells to provide power to an electric motor(s) that drives the wheels for propulsion. EVs have gained significant attention as a sustainable alternative to traditional gasoline-powered vehicles, offering reduced greenhouse gas emissions and lower dependence on fossil fuels. EVs come in different forms. For example, a battery EV (BEV) is an EV that is powered purely by electric power stored in a battery of a battery system. The battery is charged from an external power source like a charging station or home charger. On the other hand, a hybrid EV (HEV) includes both an internal combustion engine and an electric motor(s) powered by a battery. A control system controls where power from the ICE, the battery, or a combination of both is used to drive the wheels of the vehicle. In both scenarios of a BEV and an HEV, the vehicle includes a battery system that includes one or more batteries to provide electric power.

The batteries in EVs are often made up of multiple batteries to meet performance, safety, efficiency, and practical requirements. Providing multiple batteries in a battery system of an EV may allow the EV to store more energy than single batteries. An EV battery may consist of multiple battery packs connected together in parallel. An EV battery may include one or more battery strings connected in parallel, with each battery string including multiple battery packs connected together in series to produce a specific voltage. Each battery pack is a battery module or package includes a plurality of battery cells that are connected together in series. Using multiple smaller battery packs may make it easier to scale battery systems for different vehicle models or performance needs without designing an entirely new battery system. Smaller, distributed battery packs may also be easier to cool than one large, monolithic battery. Proper cooling improves battery performance and longevity. Using multiple smaller battery packs also allows for better management of heat generation, which is critical for safety and efficiency. Smaller battery packs are easier to manufacture and assemble in a modular fashion than a larger single battery pack, for example.

However, in instances where providing an EV battery includes multiple battery strings, it is desired when commissioning the EV battery for each of the battery strings to be at the same or close to the same state-of-charge (SOC). This is so that the battery cells in a given battery string maintain a similar SOC to other battery cells in other battery strings during their use, preventing overcharging and over-discharging of the individual battery cells. Overcharging and over-discharging of the individual battery cells can significantly reduce a battery's lifespan, capacity, and potentially create safety hazards. Keeping the battery cells balanced between battery strings maximizes the usable energy from the battery. When providing for each battery string comprised of multiple battery packs connected in series, as part of balancing SOC, it is also important to balance the SOC between the multiple battery packs within a given battery string.

Thus, when an EV battery comprised of multiple battery packs/strings is commissioned for an EV, it is desired that the multiple battery packs/strings have the same SOC. The desired SOC in each battery pack can be attained by first charging each battery pack to the desired SOC and then installing the battery packs in the EV. However, the battery packs/strings may not all be installed at the same time. For example, a subset of the battery packs/strings may be initially installed in an EV chassis at a first time and a first installation location so that the EV has power to perform certain initial commissioning operations. The EV chassis may then be shipped to a second installation location to perform additional installation operations that may be better suited to a different location from the first installation location. The EV chassis may be shipped without all the battery packs/strings installed to reduce shipping weight and associated cost from shipping the EV chassis from the first installation location to the second installation location. However, this installation process also means that the additional battery packs/strings installed at the second installation location need to be at the same SOC as the already installed battery pack(s)/string(s). The already installed battery pack(s)/strings(s) may have an unknown SOC and/or may have lost some SOC since first installed. Thus, a technician must manually test the SOC of the already installed battery pack(s)/string(s) and then either charge/discharge the already installed battery pack(s)/string(s) and/or charge/discharge the new battery pack(s)/string(s) to be installed in a time consuming manner to achieve a balance in SOC between the battery packs/string(s).

### SUMMARY

Exemplary aspects disclosed herein include balancing state-of-charge (SOC) in a battery(ies) in an electric vehicle (EV) through an on-board battery management system (BMS) in the EV. As examples, the EV can be a battery EV (BEV) that includes electric motor(s) operated solely on electric power from batteries, or a hybrid EV (HEV) that includes both an internal combustion engine and an electric motor(s) powered by an EV battery. The EV includes an EV battery system that includes an EV battery and an on-board BMS configured to control charging of the EV battery from power received through an external charging station coupled to the EV. The EV battery system may also include a battery management unit (BMU) configured to be controlled by the on-board BMS to control the actual coupling/decoupling of the EV battery to a charging path for the EV battery system to charge the EV battery according to a target SOC. It may be desired for the EV battery to be modular, containing multiple replaceable batteries (e.g., battery packs or battery strings each having multiple battery packs) connected in parallel to allow for customized battery installation configurations. For example, the multiple batteries may consist of multiple battery packs connected in parallel with each battery pack that can be a battery module or package having multiple battery cells connected in series. As another example, the multiple batteries may consist of multiple battery strings connected in parallel with each battery string having multiple battery packs connected in series. Providing the EV battery with multiple batteries allows the individual batteries to be replaced without having to replace an entire EV battery to remedy defective battery cells. Modular EV battery designs also provide flexibility in EV assembly. For example, it may be desired in a first assembly stage at a first assembly location to install only one battery or a subset of multiple batteries of the EV battery in the EV that have been manually charged to a target SOC before installation. Then, an additional battery(ies), which has also been manually charged to the target SOC before installation, may be installed later in time in the EV and/or at a second assembly location. In this manner, transport/shipping weight is reduced when transporting the EV from the first assembly location to the second assembly location. It is important that each of the multiple batteries in the EV battery have a balanced SOC to maximize usable EV battery capacity, extend the lifespan of the EV battery, and/or to prevent safety issues from individual battery cells of the EV battery from being overcharged or deeply discharged. However, the SOC of a first installed battery(ies) may have degraded and/or be different from the SOC of the additional batteries to be installed.

In this regard, in exemplary aspects disclosed herein, the on-board BMS is configured to be placed in an SOC service mode to provide on-board charging of an installed batteries of the EV battery of an EV from power received from an external charging station according to a target SOC. In the SOC service mode, the on-board BMS is configured to provide on-board charging/discharging of installed batteries (e.g., battery packs/strings) using components present in the EV battery system used to perform normal charging/discharging of a fully installed EV battery during normal use of the EV. In this manner, the on-board BMS can be used to charge/discharge fewer than all batteries of the EV battery, some of which may have been installed in stages during EV assembly. In this manner, installed batteries in the EV do not have to be physically removed and manually charged/discharged to the target SOC and/or before additional batteries are installed to achieve balancing of all of the batteries for the EV battery. As an example, in the SOC service mode of the on-board BMS, the target SOC to charge/discharge existing battery(ies) installed in the EV can be chosen to be the SOC of an additional, remaining battery(ies) to be installed in the EV if other battery(ies) are not yet installed in the EV battery. Alternatively, the SOC service mode can be performed when all batteries for the EV battery are installed. The on-board BMS can be configured in the SOC service mode to use its on-board charging/discharging capability to control power from a connected charging station to first charge/discharge installed battery(ies) to the target SOC. After the installed battery(ies) reach the target SOC, the on-board BMS discontinues charging/discharging of the installed battery(ies). In an example, if all batteries of the EV battery are not present during the performance of the SOC service mode, additional battery(ies) can be installed after the SOC service mode. These additional batter(ies) can be pre-charged to the target SOC or changed/discharged to the target SOC in another performed SOC service mode. In this manner, the SOC of the batteries in the EV battery will be balanced to the target SOC and each other. This is so that the EV battery can operate in a balanced SOC during normal operation from charging and discharging during vehicle operation.

In another exemplary aspect, to facilitate use of the existing on-board BMS in an EV to charge/discharge an installed batteries (e.g., battery strings, battery packs) in the SOC service mode, the on-board BMS may be configured to alter its programmed or configured target SOC parameter that is otherwise used to charge the EV battery during normal charging operations. In this regard, the on-board BMS may be configured with a maximum target SOC that is less than the true maximum SOC of the EV battery as a protection mechanism for the EV battery in normal charging operations. For example, the on-board BMS may be configured with a maximum target SOC (e.g., 90%) enforced for normal battery charging that has a 10% SOC difference to a perceived maximum SOC target (e.g., 100%) that is presented to the operator of the EV. This is so that the EV battery can never be charged to its true maximum SOC during normal charging operations, to protect the EV battery. However, in the SOC service mode, the target SOC desired for the installed batteries may need to be a true SOC so that the batteries in the EV can be charged/discharged to their true SOC and in balance with each other. As another example, this may also be desired, because additional batteries yet to be installed int he EV battery may have their true SOC measured outside of the EV based on a true SOC and then installed after the SOC service mode is performed. Thus, in this example, where the on-board BMS is normally configured to charge the EV battery to a perceived SOC target during charging, the on-board BMS is reconfigured in the SOC service mode to use a SOC target based on a true maximum SOC for charging/discharging the installed batteries in the EV battery. In this manner, the on-board BMS is reconfigured to be compatible with a SOC target that is a true SOC target that may be used to balance the installed batteries in the EV battery. To reconfigure the on-board BMS to charge/discharge based on a true SOC target, the on-board BMS may be configured to select and use a programmed true maximum SOC as the maximum SOC for the EV battery, or may be configured to download software/firmware to charge in the SOC service mode based on a true target SOC.

In another exemplary aspect, the EV battery can be configured as containing multiple batteries consisting of multiple battery packs connected in parallel to form the EV battery. The multiple battery packs each include multiple battery cells connected in series to achieve a desired voltage. In this example, the on-board BMS can be configured to provide onboard charging/discharging installed battery packs of the EV battery to a target SOC in the SOC service mode. In this manner, the installed battery packs in the EV battery can be charged/discharged to a target SOC of additional battery packs to be installed in the EV battery. In another exemplary aspect, the EV battery can be configured to have multiple battery strings connected in parallel to form the EV battery. Each battery string contains a plurality of battery packs connected in series, wherein each battery pack comprises a plurality of battery cells connected in series to achieve a desired voltage. In this example, the on-board BMS can be configured to provide onboard charging/discharging of installed battery strings in the EV battery to a target SOC in the SOC service mode. In this manner, the installed battery strings in the EV battery can be charged/discharged to a target SOC of additional battery strings to be installed in the EV battery.

In other exemplary aspects, in response to the on-board BMS being placed into the SOC service mode, the on-board BMS is configured to access a target SOC for the SOC service mode. The target SOC may be entered by a user/technician or previously programmed by a user/technician and/or during manufacture and/or assembly to be used for the SOC service mode, as examples. The target SOC may be controlled or selected to match the SOC of a pre-charged additional battery pack(s) to be installed in the EV as part of the EV battery. The on-board BMS is configured to determine the existing SOC of the batteries installed in the EV battery based on the voltage (e.g., open cell voltage (OCV)) of the installed batteries of the EV battery. The voltage of the batteries can be correlated to an SOC of the batteries. If the SOC of the installed batteries is different from the target SOC (e.g., by an SOC threshold), the on-board BMS can be configured to perform charging/discharging of the installed batteries through an external charging station coupled to the on-board BMS to bring the SOC of the installed batteries to the target SOC. As an example, the on-board BMS can control charging of installed batteries by communicating to the external charging station coupled to the EV to adjust the charging current to charge the installed battery packs of the EV battery to the target SOC. As another example, the on-board BMS can control discharging of installed batteries by activating power consuming devices in the EV to cause energy to be discharged from the installed batteries. The on-board BMS can continue to monitor the voltage of the installed batteries to determine when they have reached the target SOC to then discontinue charging/discharging. For example, the on-board BMS may include a control unit that is configured to control a battery management unit (BMU) to measure the voltage of the installed batteries and to open and close contacts to the charging path in the EV battery system to control whether installed batteries are charged/discharged.

If there are multiple installed batteries in the EV, the on-board BMS may be configured to determine the existing SOC for each of installed batteries individually, and then to charge/discharge each of the installed batteries together or individually to the target SOC. For example, multiple installed batteries may not have the same initial SOC, but may have an initial SOC below the target SOC. In this regard, the multiple installed batteries may be able to be charged/discharged at the same time initially, but once an installed battery reaches the target SOC before the other(s) battery(ies), the on-board BMS can be configured to selectively discontinue charging/discharging of the specific battery that has reached the target SOC before the other installed battery(ies) have reached the target SOC. Whether or not multiple installed batteries can be charged/discharged together at the same time during the SOC service mode is a function of their initial SOCs and whether these initial SOCs are compatible to allow charging/discharging at the same time during at least a portion of the SOC service mode to reach the target SOC.

In other exemplary aspects, the on-board BMS may also be configured to reduce the charging/discharging rate of an EV battery in the SOC service mode in response to detecting unstable voltage in an installed battery (e.g., battery pack, battery string) of the EV battery. For example, an unstable voltage may occur in a battery pack being charged/discharged at a faster charge/discharge rate. A battery's charge/discharge rate affects its voltage by influencing how quickly energy is pushed or released from its battery cells. For example, a battery pack having an unstable voltage may make it more difficult to accurately determine the SOC of the battery pack during charging/discharging in the SOC service mode at a given charge/discharge rate. However, if the charge/discharge rate is slowed, this may result in a more stable voltage that would then allow an accurate determination of the SOC of the battery pack with an initially unstable voltage during the SOC service mode. In this regard, in an example, in response to the on-board BMS detecting an unstable voltage in a battery being charged/discharged in the SOC service mode, the on-board BMS is configured to control the external charging station to reduce the rate of charge/discharge (e.g., by reducing charging current). In this manner, if the voltage of a battery in the EV battery initially detected as having an unstable voltage during the SOC service mode becomes stable in the SOC service mode after the rate of charge/discharge is reduced, the on-board BMS can continue with the SOC service mode so that the installed battery(ies) reach the target SOC, as desired. The battery that is detected as having an unstable voltage can be subsequently replaced after the SOC service mode is completed, if desired.

In other exemplary aspects, if the on-board BMS continues to detect unstable voltage in an installed battery pack of a battery in the EV battery during charging/discharging in the SOC service mode, this may be an indication that one or more battery cells in the battery pack are bad, potentially caused by damage, aging, internal short circuits, and/or poor connectivity. The battery packs may also be configured with a charge sensing circuit that is configured to internally monitor its battery cells and detect bad battery cells and communicate same to the on-board BMS. In either case, when a battery pack is detected with a bad battery cell(s) either through unstable voltage and/or self-reporting from a battery pack, it may be undesirable to charge/discharge the battery pack with the detected bad battery cell(s) for safety reasons. In this regard, the on-board BMS can be configured to internally provide a bypass connection around the detected bad battery pack so that the remaining battery packs are connected in series in the charging path in the SOC service mode. For example, a control unit in the on-board BMS may be configured to communicate to a BMU in the on-board BMS to disconnect contacts between the bad battery pack and the charging path in the EV battery system. The on-board BMS can then, still in the SOC service mode, reduce the charging/discharging voltage proportional to the reduction in total capacity of the battery containing the bad battery pack. For example, if a battery has four (4) battery packs each of 100 Volts (V) voltage rating connected in series, and thus a 400 V total voltage rating, and one battery pack in the battery is removed, the on-board BMS can be configured to reduce the charging voltage by one-fourth (¼) for the remaining three (3) battery packs at a 300 V voltage rating to normalize the charging current to compensate for the removed battery pack when charging is needed for the battery to reach the target SOC. In this manner, the remaining battery packs in the battery are charged at the same charging rate in the SOC service mode as before until the target SOC is reached, so as to not overstress the remaining battery packs in the battery. In one example, the on-board BMS can be configured to reduce the charging/discharging voltage by communicating to the external charging station to reduce its charging/discharging voltage. In another example, the on-board BMS can be configured to internally reduce the charging/discharging voltage, such as through an internal AC-to-DC converter circuit that converts AC power from the external charging station to DC power. The bad battery pack can later be removed manually after the SOC service mode is completed, with the bad battery pack being replaced with a new battery pack that has been pre-charged to the target SOC. This then returns its battery to full capacity and with a balanced SOC between the battery packs in the EV battery.

In this regard, in an example, including in at least one preferred example, an on-board battery management system (BMS) in an electric vehicle (EV) is disclosed. The on-board BMS includes processing circuitry configured to regulate energy discharged from an electric vehicle (EV) battery to at least one electric motor in an EV, the EV battery including a plurality of battery interface circuits connected in parallel and each configured to be coupled to a battery of a plurality of batteries. The processing circuitry is further configured to store a target state-of-charge (SOC) for an SOC service mode in the EV based on a true maximum SOC of the EV battery, and receive a request for the SOC service mode. In response to the SOC service mode, the processing circuitry is configured to detect each coupled battery of the plurality of batteries coupled to a battery interface circuit of the plurality of battery interface circuits; and for each detected coupled battery, determine an SOC of the coupled battery, determine the SOC of the coupled battery outside the target SOC, and in response to the SOC of the coupled battery outside the target SOC, regulate the SOC of the coupled battery to the target SOC. A technical benefit may include the same on-board BMS that is used for charging/discharging the EV battery during a normal operating mode also being able to charge/discharge batteries installed in the EV battery during a SOC service mode to a target SOC, such as during an assembly process, and to achieve SOC balance between multiple batteries in the EV battery. Another technical benefit of using the on-board BMS to regulate charge during an SOC service mode is not having to physically remove and manually charge/discharge batteries for the EV battery to the target SOC in a service mode, such as during assembly and/or before additional batteries are installed to achieve balancing of all of the batteries for the EV battery.

Optionally in some examples, including in at least one preferred example, the processing circuitry is further configured to receive a request for a battery charging mode in the EV; and in response to receiving the request for the battery charging mode, charge the EV battery from power received from an external charging station to the target SOC based on a perceived maximum SOC for the EV battery less than the true maximum SOC. A technical benefit may include the on-board BMS being able to charge the EV battery in the EV in not only the SOC service mode, but also in a normal operational mode when the EV is normal operation, such as when being driving and the EV battery being charged by a user.

Optionally in some examples, including in at least one preferred example, the plurality of batteries includes a plurality of battery packs connected in parallel. A technical benefit may include an EV battery that includes multiple battery packs whose charge can be regulated by the on-board BMS as part of the EV battery in the SOC service mode.

Optionally in some examples, including in at least one preferred example, the plurality of batteries includes a plurality of battery strings connected in parallel, wherein each battery string of the plurality of battery strings includes a plurality of battery packs connected in series. A technical benefit may include an EV battery that includes multiple battery strings whose charge can be regulated by the on-board BMS as part of the EV battery in the SOC service mode.

Optionally in some examples, including in at least one preferred example, the processing circuitry is configured to, in response to the SOC service mode, for each coupled battery, determine the SOC of the coupled battery outside the target SOC by being configured to determine the SOC below the target SOC; and in response to determining the SOC of the coupled battery is below the target SOC, charge the coupled battery to be within the target SOC from power from an external charging station coupled to the EV. A technical benefit may include the same on-board BMS that is used for charging the EV battery during a normal operating mode also being able to charge batteries installed in the EV battery during a SOC service mode, such as during an assembly process, and to achieve SOC balance between multiple batteries in the EV battery.

Optionally in some examples, including in at least one preferred example, the processing circuitry is configured to, in response to the SOC service mode, for each coupled battery, determine the SOC of the coupled battery outside the target SOC by being configured to determine the SOC is above the target SOC, and in response to determining the SOC of the coupled battery is above the target SOC, discharge the coupled battery to be within the target SOC. A technical benefit may include the same on-board BMS that is used for discharging the EV battery during a normal operating mode also being able to discharge batteries installed in the EV battery during a SOC service mode, such as during an assembly process, and to achieve SOC balance between multiple batteries in the EV battery.

Optionally in some examples, including in at least one preferred example, the processing circuitry is configured to, in response to the SOC service mode, for each coupled battery, discharge the coupled battery to be within the target SOC by activating one or more power consuming devices in the EV. A technical benefit may include the ability to provide a power source in which discharged energy from the EV battery can be consumed in the SOC service mode to avoid overheating the EV battery and reducing its performance.

Optionally in some examples, including in at least one preferred example, in response to the SOC service mode, for each coupled battery, the processing circuitry is further configured to sense open circuit voltage of the coupled battery, and configured to determine the SOC of the coupled battery based on the open circuit voltage at the battery interface circuit coupled to the coupled battery. A technical benefit may include the ability to use the OCV to accurately determine the SOC of a battery(ies) installed in the EV battery during the SOC service mode for use by the on-board BMS to determine how to regulate the charge energy to the installed battery(ies).

Optionally in some examples, including in at least one preferred example, the processing circuitry is configured to detect each coupled battery of the plurality of batteries coupled to a battery interface circuit of the plurality of battery interface circuits based on the sensed open circuit voltage at each battery interface circuit of the plurality of battery interface circuits. A technical benefit may include the ability for the on-board BMS to be able to detect the presence of batteries installed in the EV battery to then be able to regulate their charge energy during the SOC service mode.

Optionally in some examples, including in at least one preferred example, the plurality of battery interface circuits includes a plurality of relay circuits, and in response to the SOC service mode, the processing circuity is further configured to close the plurality of relay circuits to couple each coupled battery to the processing circuitry and configured to detect each coupled battery when the plurality of relay circuits is closed. A technical benefit may include the ability to selectively control the relay circuits to selectively control which installed EV battery(ies) in the EV are regulated during the SOC service mode to achieve the target SOC and/or for balancing multiple installed batteries in the EV battery.

Optionally in some examples, including in at least one preferred example, in response to the SOC service mode, and for each coupled battery, the processing circuity is further configured to, in response to the SOC of the coupled battery being within the target SOC, open a relay circuit of the plurality of relay circuits coupled to the coupled battery to decouple the battery from the processing circuitry. A technical benefit may include the ability to selectively control the relay circuits to selectively discontinue the regulation of charge energy to an installed EV battery(ies) in the EV are regulated when the SOC service mode is completed.

Optionally in some examples, including in at least one preferred example, the processing circuitry is further configured to, in response to the SOC service mode, for each coupled battery, determine whether there is an instability in the sensed open circuit voltage of the coupled battery, and in response to determining an instability in the sensed open circuit voltage of the coupled battery, reduce a regulation rate of the regulation of the SOC of the battery to the target SOC. A technical benefit may include if the voltage of a battery in the EV battery initially detected as having an unstable voltage during the SOC service mode becomes stable in the SOC service mode after the rate of charge/discharge is reduced, the on-board BMS can continue with the SOC service mode so that the installed battery(ies) reach the target SOC, as desired. The battery that is detected as having an unstable voltage can be subsequently replaced after the SOC service mode is completed, if desired.

Optionally in some examples, including in at least one preferred example, the processing circuitry is configured to, in response to the SOC service mode, for each coupled battery, determine the SOC of the coupled battery outside the target SOC by being configured to determine the SOC below the target SOC; in response to determining the SOC of the coupled battery is below the target SOC, charge the coupled battery to be within the target SOC; and in response to determining the instability in the sensed open circuit voltage of the coupled battery, reduce a charge rate of the charge of the coupled battery to be within the target SOC. A technical benefit may include the ability of the SOC service mode being able to be continued so that the installed battery(ies) can be charged to reach their target SOC.

Optionally in some examples, including in at least one preferred example, the processing circuitry is configured to, in response to the SOC service mode, for each coupled battery, determine the SOC of the coupled battery is outside the target SOC by being configured to determine the SOC above the target SOC; in response to determining the SOC of the coupled battery is above the target SOC, discharge the coupled battery to be within the target SOC; and in response to determining the instability in the sensed open circuit voltage of the coupled battery, reduce a discharge rate of the discharge of the coupled battery to be within the target SOC. A technical benefit may include the ability of the SOC service mode being able to be continued so that the installed battery(ies) can be charged to reach their target SOC by controlling the charging rate of an external charging station coupled to the EV that provides charge energy for regulating the charge of the EV battery.

Optionally in some examples, including in at least one preferred example, the processing circuitry is further configured to, in response to the SOC service mode, for each coupled battery, determine one or more battery packs among the plurality of battery packs in a coupled battery string have one or more defective battery cells; and in response to determining the coupled battery string has one or more battery packs that have one or more defective battery cells, decouple the one or more battery packs from the coupled battery string with the other battery packs of the plurality of battery packs connected in series, and reduce a regulation voltage used to regulate the SOC of the coupled battery to the target SOC based on a reduced battery capacity of the coupled battery string from the decoupled one or more battery packs from the coupled battery string. A technical benefit may include the ability to regulate the charge energy of the remaining battery packs in the EV battery at the same charging rate in the SOC service mode as before until the target SOC is reached, so as to not overstress the remaining battery packs in the battery. The bad battery pack can later be removed manually after the SOC service mode is completed, with the bad battery pack being replaced with a new battery pack that has been pre-charged to the target SOC. This then returns its battery to full capacity and with a balanced SOC between the battery packs in the EV battery

Optionally in some examples, including in at least one preferred example, the processing circuitry is configured to reduce the regulation voltage by being configured to reduce a regulation voltage used to regulate the SOC of the coupled battery to the target SOC proportional to the reduced battery capacity of the coupled battery string from the decoupled one or more battery packs from the coupled battery string. A technical benefit may include the ability to proportionally regulate the charge energy of the remaining battery packs in the EV battery at the same charging rate in the SOC service mode as before until the target SOC is reached, so as to not overstress the remaining battery packs in the battery.

In this regard, in an example, including in at least one preferred example, a vehicle can include the on-board BMS discussed above. A technical benefit may include any of those recited above for the on-board BMS.

In this regard, in an example, including in at least one preferred example, a computer-implemented method of a processing circuitry in an on-board battery management system (BMS) in an electric vehicle (EV) managing a state-of-charge (SOC) in an EV battery including a plurality of battery interface circuits connected in parallel and each configured to be coupled to a battery of a plurality of batteries is disclosed. The method includes regulating energy, by the processing circuitry, discharged from the EV battery to at least one electric motor in the EV; storing, by the processing circuitry, a target state-of-charge (SOC) for an SOC service mode in the EV based on a true maximum SOC of the EV battery; and receiving, by the processing circuitry, a request for the SOC service mode. In response to receiving the request for the SOC service mode, the method includes detecting each coupled battery of the plurality of batteries coupled to a battery interface circuit of the plurality of battery interface circuits; and for each detected coupled battery, the method includes determining, by the processing circuitry, an SOC of the coupled battery; determining, by the processing circuitry, whether the SOC of the coupled battery is outside the target SOC; and regulating, by the processing circuitry, the SOC of the coupled battery to the target SOC, in response to the determined SOC of the coupled battery being outside the target SOC. A technical benefit may include any of those recited above for the on-board BMS.

In this regard, in an example, including in at least one preferred example, a computer program product can include program code for performing, when executed by the processing circuitry, the method discussed above. A technical benefit may include any of those recited above for the on-board BMS.

In this regard, in an example, including in at least one preferred example, a non-transitory computer-readable storage medium can include instructions, which, when executed by the processing circuitry, cause the processing circuitry to perform the method discussed above. A technical benefit may include any of those recited above for the on-board BMS.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

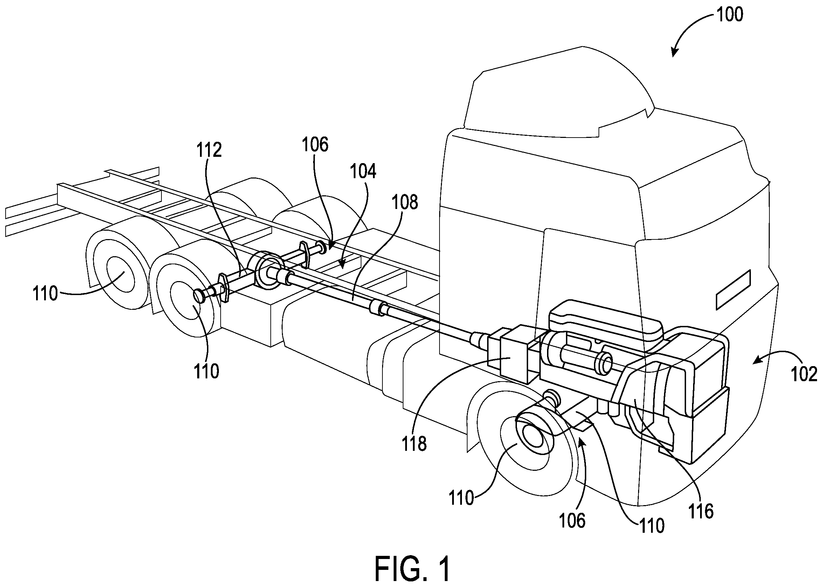

**FIG. 1** is a side perspective view of an exemplary electric vehicle (EV) in the form of a truck that has an EV battery system that includes an EV battery configured to provide power to an electric motor(s) that drives the wheels for propulsion;

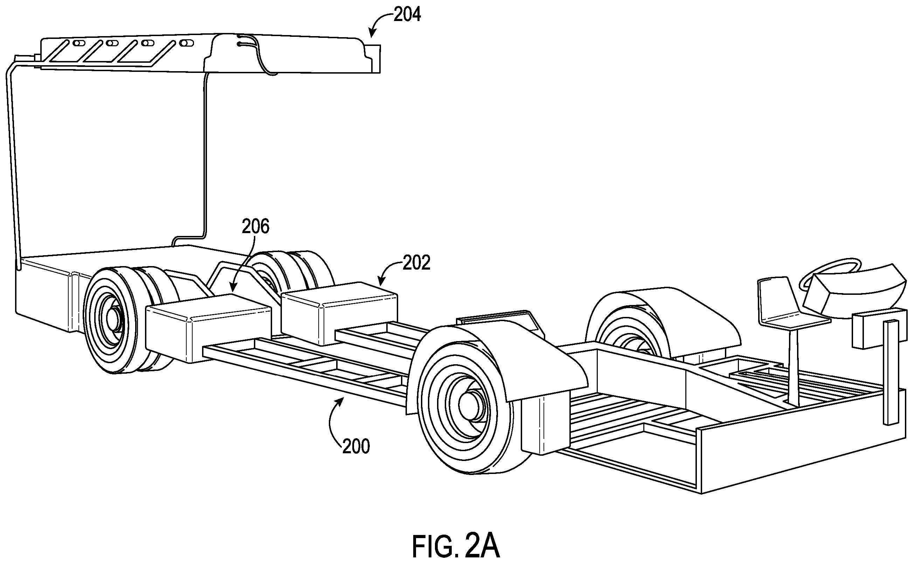

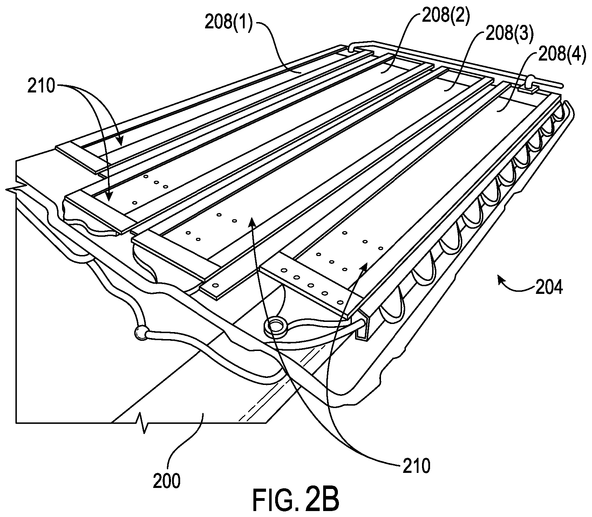

**FIGS. 2A** and **2B** is an exemplary vehicle chassis for an EV that can be included in the EV in **FIG. 1****,** wherein the vehicle chassis has an exemplary EV battery system that includes an EV battery and an on-board battery management system (BMS) configured to regulate the charge of the EV battery, wherein the EV battery has one or more battery(ies) each comprised of a plurality of battery cells;

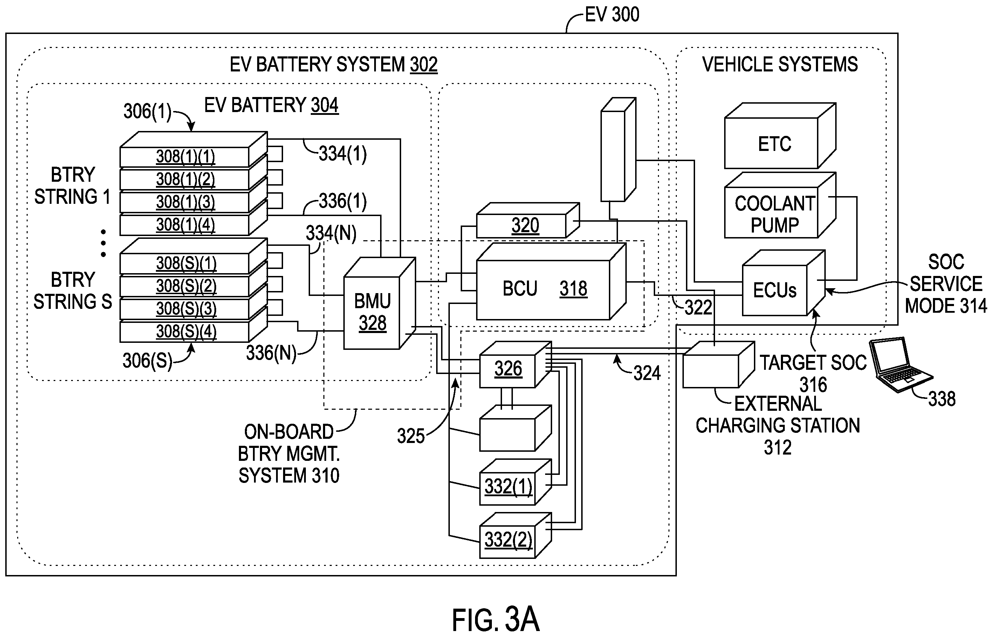

**FIG. 3A** is a schematic diagram of an exemplary EV battery system that includes an EV battery having multiple battery strings connected in series, with each battery string including multiple battery packs, and an on-board BMS configured to regulate the charge of the EV battery during operation of the EV, wherein the on-board BMS is configured to be placed into a state-of-charge (SOC) service mode to regulate the charge of an installed battery strings in the EV battery to a target SOC from an external charging station coupled to the EV battery system;

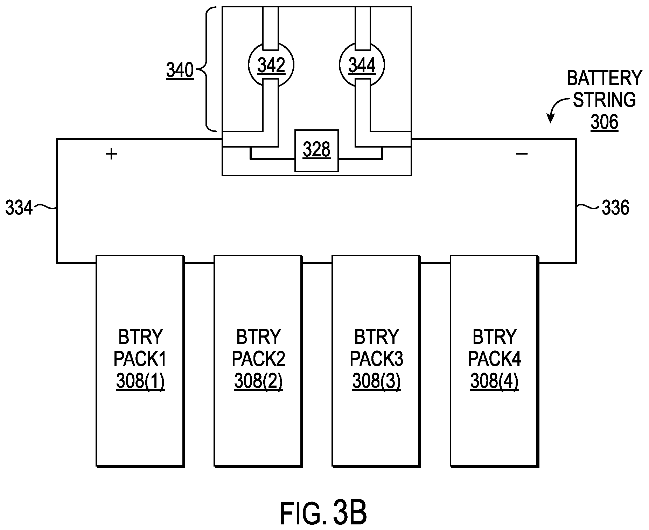

**FIG. 3B** is a schematic diagram of a single battery string in the EV battery in the EV battery system in **FIG. 3A****,** and a battery management unit (BMU) as part of the on-board BMS in **FIG. 3A** configured to be controlled to selectively couple the battery string to a charging path of the EV battery system and to measure the open circuit voltage (OCV) of the battery string for detecting the SOC of the battery string;

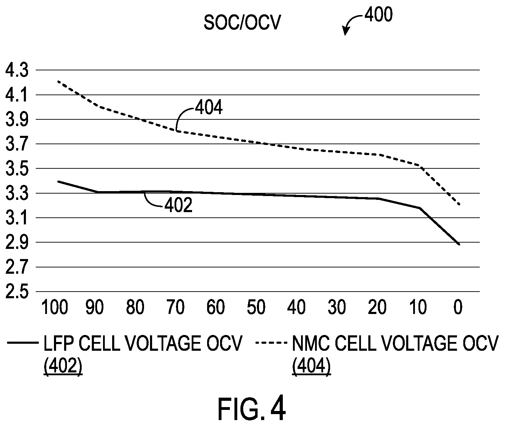

**FIG. 4** is a graph and illustrating an exemplary voltage curve showing a relation between OCV and SOC, and which can be used by the on-board BMS in **FIG. 3A** to correlate OCV of a battery string to its SOC;

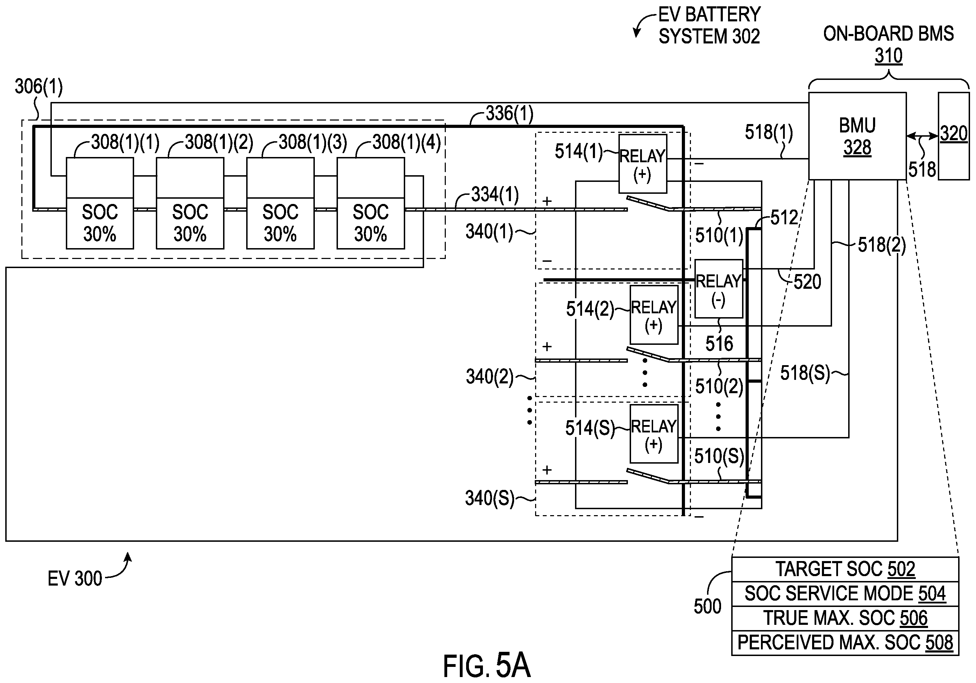

**FIG. 5A** illustrates the EV battery system in **FIG. 3B** with a single installed battery string having an initial SOC below a target SOC for other additional battery strings to be installed in the EV battery;

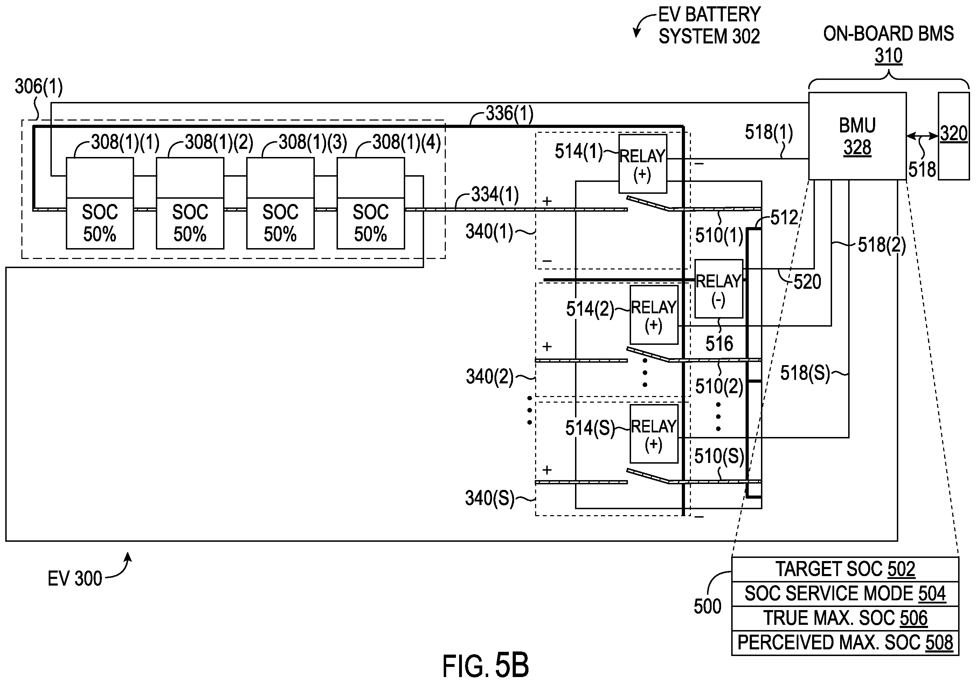

**FIG. 5B** illustrates the EV battery system in **FIG. 5A** with the single installed battery string having an SOC of the target SOC after the on-board BMS charges the installed battery string in a SOC service mode;

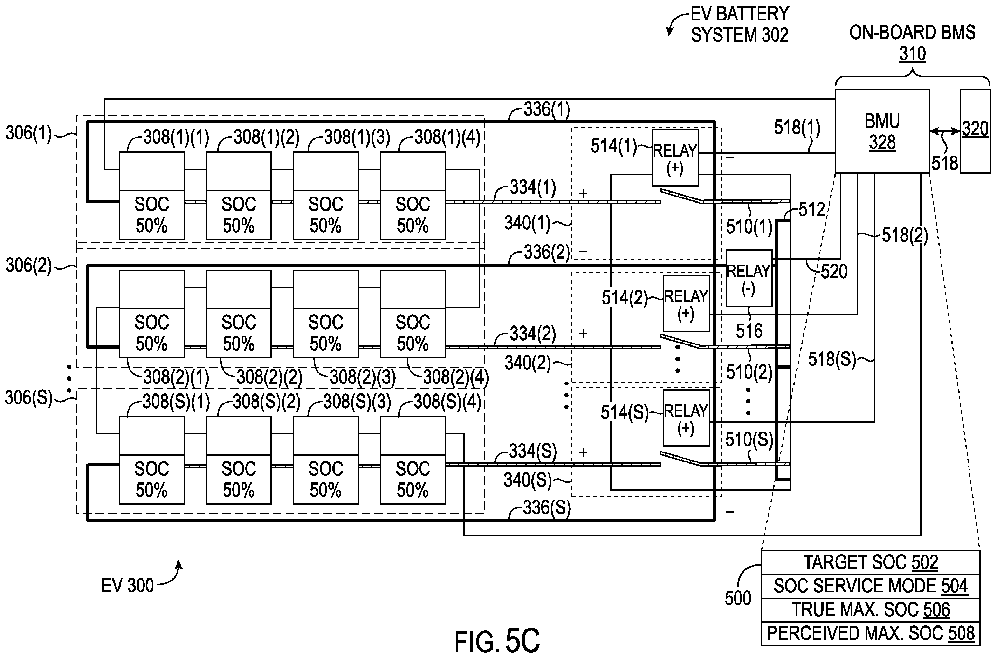

**FIG. 5C** illustrates the EV battery system in **FIG. 5B** with the single installed battery string having an SOC of the target SOC matching the SOC of additional battery strings installed after the SOC service mode is completed;

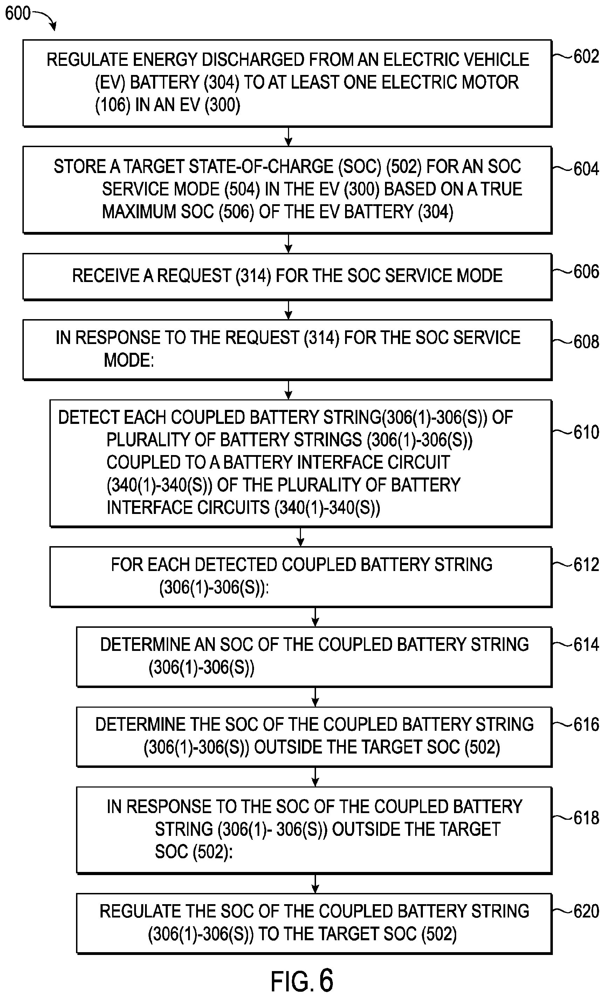

**FIG. 6** is a flowchart illustrating an exemplary SOC service mode process that can be performed by an on-board BMS in an EV battery system, including but not limited to the on-board BMS in an EV battery system in **FIGS. 3A****,** **3B****,** and **5A****-5C,** wherein the SOC service mode process involves regulating the charge of an installed batteries for an EV battery to a target SOC from an external charging station coupled to the EV battery system;

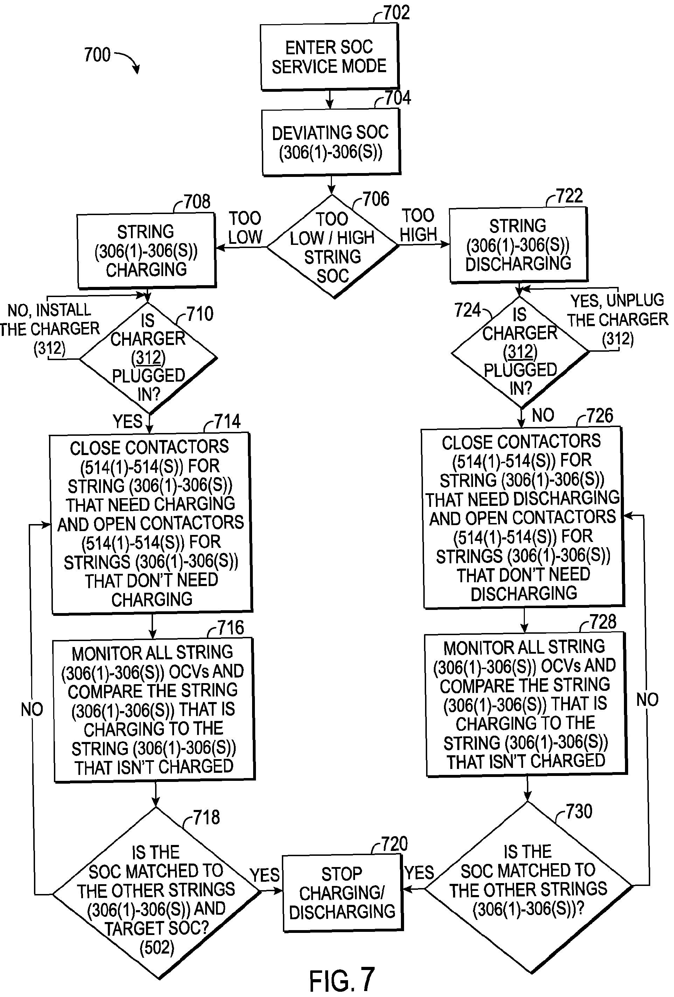

**FIG. 7** is a schematic diagram of the exemplary EV battery system in **FIGS. 3A** and **5A****-5C,** showing a battery pack in a battery string of the EV battery detected with a voltage instability, and wherein the on-board BMS is configured to slow the charge/discharge rate of the battery string with the battery pack detected with a voltage instability;

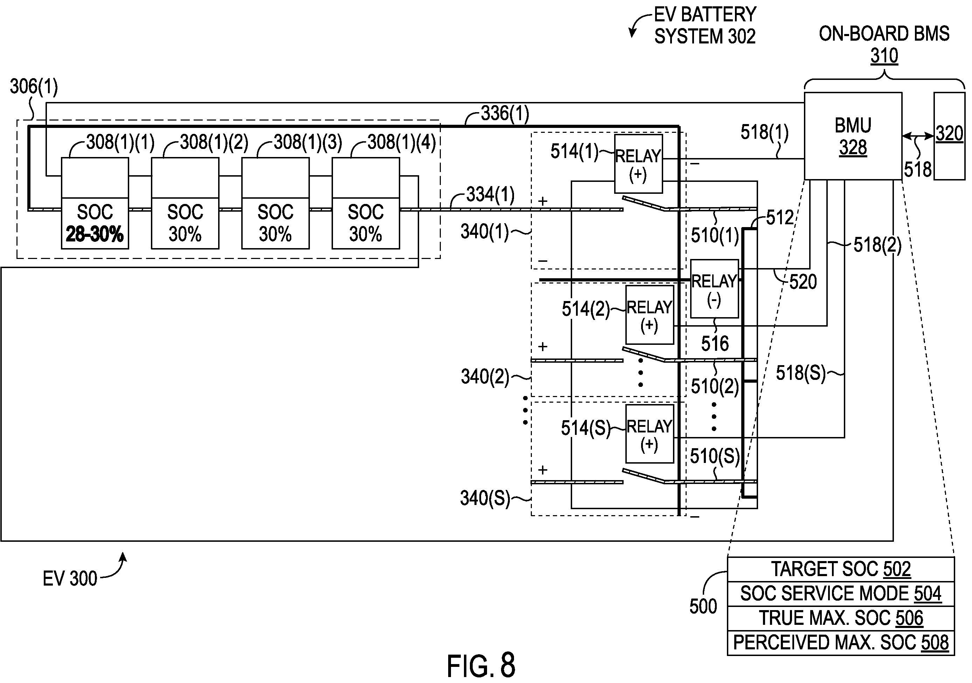

**FIG. 8** is a flowchart illustrating another exemplary SOC service mode process that can be performed by an on-board BMS in an EV battery system, including but not limited to the on-board BMS in an EV battery system in **FIGS. 3A****,** **3B****,** **5A-5C****,** and 7 wherein the SOC service mode process involves regulating the charge of an installed batteries for an EV battery to a target SOC from an external charging station coupled to the EV battery system;

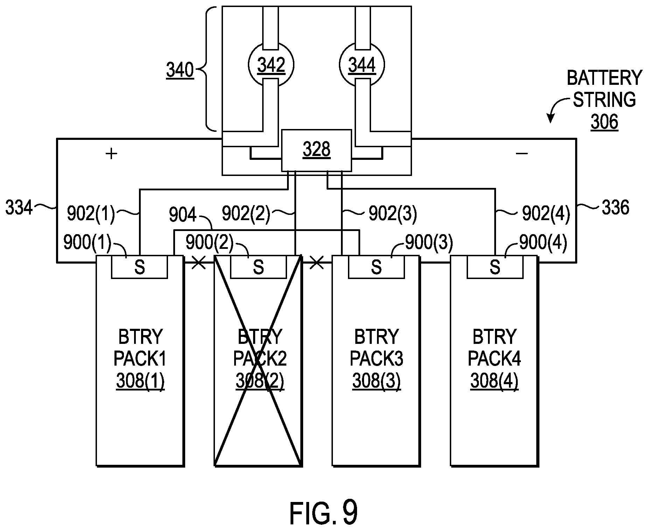

**FIG. 9** is a schematic diagram of another exemplary EV battery system similar to the EV battery system in **FIGS. 3A****,** **3B** and **5A****-5C,** wherein each battery pack in the battery string of the EV battery includes a charge sensing circuit (CSC) configured to detect a bad battery cell(s) within its battery pack and report a bad battery cell condition of the battery pack, and wherein in response, the on-board BMS is configured to, in the SOC service mode, cause the battery pack with the detected bad battery cell(s) to be disconnected from the charging path of the EV battery system and reduce the charging voltage used to charge the battery pack to the target SOC to avoid overstressing the battery pack;

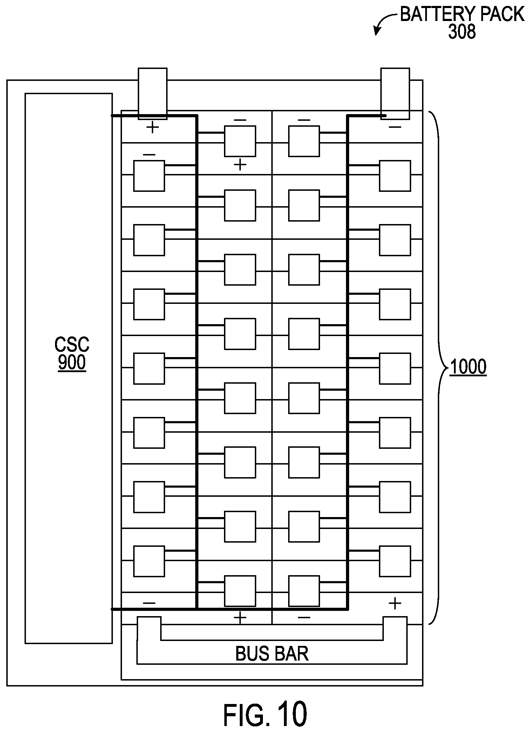

**FIG. 10** is a schematic diagram of an exemplary battery pack of the EV battery in the EV battery system in **FIG. 8****,** wherein the battery pack includes the CSC configured to detect bad battery cell(s) within its battery pack and report a bad battery cell condition of the battery pack to the BMU of the on-board BMS; and

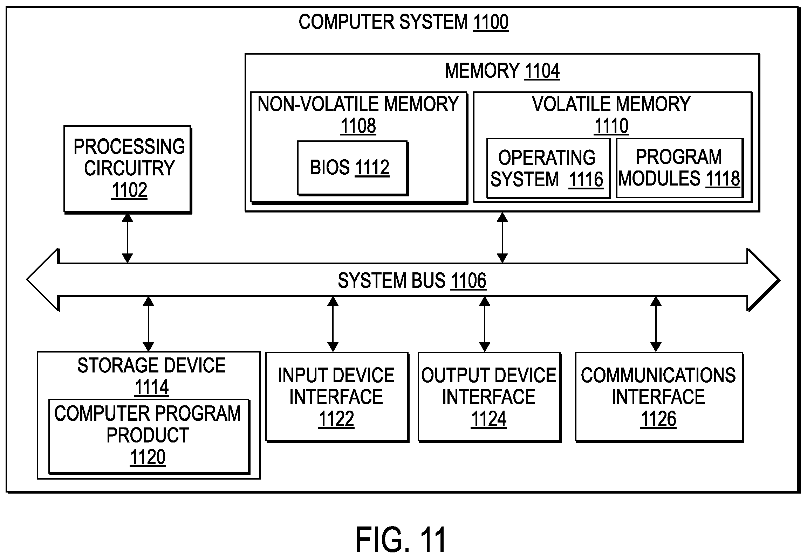

**FIG. 11** is a block diagram of an exemplary computer system that can be included in an EV battery system and/or an on-board BMS of an EV battery system, including but not limited to the EV battery systems and on-board BMSs in **FIGS. 1****,** **2A****,** **3A-3B****,** **5A-5C****,** and **8-10,** and configured to regulate the charge of an installed batteries for an EV battery to a target SOC from an external charging station coupled to the EV battery system in an SOC service mode, including but not limited to the SOC service mode processes in **FIGS. 6** and **8****.**

### DETAILED DESCRIPTION

The detailed description set forth below provides information and examples of the disclosed technology with sufficient detail to enable those skilled in the art to practice the disclosure.

**FIG. 1** is a side perspective view of an exemplary electric vehicle (EV) **100** in the form of a truck that has an EV battery system **102** that includes an EV battery **104** configured to provide power to an electric motor(s) **106** that drives the wheels for propulsion. The electric motor(s) **106** is coupled to a drive shaft **108** coupled to the front and rear axles **110, 112.** The EV **100** includes wheels **114** with tires that support the vehicle **100** on the road and are linked to front and rear axles **110, 112.** In this example, the EV **100** is a hybrid EV (HEV) that includes both the EV battery system **102** with the electric motors **106** and an internal combustion engine (ICE) **116** that is also coupled to a transmission **118** configured to provide power to the drive shaft **108.**

**FIGS. 2A** and **2B** are an exemplary vehicle chassis **200** for an EV that can be included in the EV **100 in** **FIG. 1****.** The vehicle chassis **200** has an exemplary EV battery system **202** that includes an EV battery **204** and an on-board battery management system (BMS) **206** configured to control charging/discharging of the EV battery **204.** In this example, the EV battery **204** is shown raised above the vehicle chassis **200.** As shown in **FIG. 2B****,** the EV battery **204** in this example includes four (4) battery packs **208(1)-208(4)** that are connected in parallel. Each battery pack **208(1)-208(4)** can be a battery module or package that includes a plurality of battery cells **210** coupled in series to achieve a desired voltage. In this manner, the EV battery **204** is modular in that it includes multiple replaceable battery packs **208(1)-208(4)** to allow for customized battery installation configurations. Providing the EV battery **204** with multiple battery packs **208(1)-208(4)** allows the individual battery packs **208(1)-208(4)** to be replaced without having to replace an entire EV battery **204** to remedy defective battery cells **210.**

Modular EV battery designs like the EV battery **204** in **FIGS. 2A** and **2B** also provide flexibility in assembly of an EV. For example, it may be desired in a first assembly stage of the vehicle chassis **200** at a first assembly location to install only one or a subset of the multiple battery packs **208(1)-208(4)** of the EV battery **204** that have been manually charged to a target state of charge (SOC) before installation. Then, additional battery packs of the battery packs **208(1)-208(4),** which have also been manually charged to the target SOC before installation, may be installed in the vehicle chassis **200** later in time and/or at a second assembly location. In this manner, transport/shipping weight is reduced when transporting the vehicle chassis **200** from the first assembly location to the second assembly location. It is important that each of the multiple battery packs **208(1)-208(4)** in the EV battery **204** have a balanced SOC to maximize usable EV battery capacity, extend the lifespan of the EV battery **204,** and/or to prevent safety issues from individual battery cells **210** of the EV battery **204** from being overcharged or deeply discharged. However, the SOC of a first installed battery pack **208(1)-208(4)** may have degraded and/or be different from the SOC of the additional battery packs **208(1)-208(4)** to be installed.

In this regard, it may be desired to provide an on-board BMS, like the on-board BMS **206** in **FIG. 2A**, to be configured to be placed in an SOC service mode to provide on-board regulating of charge (i.e., charging / discharging) of an installed batteries of an EV battery (e.g., the battery packs **208(1)-208(4)** of the EV battery **204 in** **FIGS. 2A** and **2B****)** from power received from an external charging station according to a target SOC. The installed batteries charged/discharged during the SOC service mode may be a subset of the batteries for the EV battery or all of the batteries for the EV battery. In the SOC service mode, the on-board BMS is configured to provide on-board charging/discharging of installed batteries (e.g., battery packs/battery strings) using components present in the EV battery system used to perform normal charging/discharging of a fully installed EV battery during normal use of the EV. In this manner, the on-board BMS can be used to charge/discharge fewer than all batteries of the EV battery, some of which may have been installed in stages during EV assembly. In this manner, installed batteries in the EV do not have to be physically removed and manually charged/discharged to the target SOC and/or before additional batteries at the target SOC are installed to achieve balancing of all of the batteries for the EV battery. As an example, in the SOC service mode of the on-board BMS, the target SOC to charge/discharge existing battery(ies) already installed in the EV can be chosen to be the SOC of an additional, remaining battery(ies) to be installed in the EV. As an additional example, before an additional battery(ies) is installed in the EV, the on-board BMS can be configured in the SOC service mode to use its on-board charging/discharging capability to control power from a connected charging station to first charge/discharge installed battery(ies) to the target SOC. After the installed battery(ies) reach the target SOC, the on-board BMS discontinues charging/discharging of the installed battery(ies), and the additional battery(ies) that have been pre-charged to the target SOC can be installed. In this manner, the SOC of the installed battery(ies) is balanced to the SOC of the additional battery(ies) installed in the EV. Thus, after the full number of battery(ies) for the EV battery are installed in the EV, all battery(ies) in the EV battery will be balanced to the target SOC, so that the EV battery can operate in a balanced SOC during normal operation from charging and discharging during vehicle operation.

In this regard, **FIG. 3A** is a schematic diagram of an EV **300** that includes an exemplary EV battery system **302.** The EV **300** can be the EV **100 in** **FIG. 1****.** The EV battery system **302** includes an EV battery **304** that includes multiple battery strings **306(1)-306(S)** connected in parallel to provide an electrical power source for the EV **300.** Each battery string **306(1)-306(S)** includes four (4) battery packs **308(1)(4)-308(S)(4)** connected in series, in this example. Each battery pack **308(1)(4)-308(S)(4)** includes a plurality of battery cells connected in series. For example, each battery pack **308(1)(4)-308(S)(4)** may have a voltage rating of 100 Volts (V) each such that each battery string **306(1)-306(S)** has a voltage rating of 400 V. Thus, the battery strings **306(1)-306(S)** are connected in parallel and the EV battery **304** as a whole would have a 400 V voltage rating. **FIG. 3B** shows a single battery string **306** connected to the on-board BMS **310,** wherein the battery string **306** could be any of the battery strings **306(1)-306(S)** in the EV battery **304** in **FIG. 3A****.** As shown in **FIG. 3B****,** the battery string **306** includes four (4) battery packs **308(1)-308(4)** connected in series, in this example. Each battery pack **308(1)(4)-308(S)(4)** includes a plurality of battery cells connected in series in this example.

As will be discussed in more detail below, the EV battery system **302** includes an on-board BMS **310** configured to control the charging/discharging of the EV battery **304** during normal operation of the EV **300.** The on-board BMS **310** is configured to control the discharging of the EV battery **304** when the EV **300** is in use, providing power from the EV battery **304** for normal operation of the EV **300** including motion. The on-board BMS **310** is configured to control the charging of the EV battery **304** from power received from an external charging station **312** when the EV **300** is in a normal charging operation to charge the EV battery **304.** If the EV **300** is an HEV, note that charging of the EV battery **304** can also occur from power from an ICE and/or regenerative braking. Normal operation is when all of the battery strings **306(1)-306(S)** are fully installed for the EV battery **304** and the on-board BMS **310** controls the charging/discharging of the battery strings **306(1)-306(S)** together such that the SOC of each of the battery strings **306(1)-306(S)** and the respective battery packs **308(1)(4)-308(S)(4)** therein are maintained at the same or substantially the same SOC. Note that all of the battery strings **306(1)-306(S)** and/or their battery packs **308(1)(4)-308(S)(4)** do not have to be installed at the same time. For example, it may be desired to initially install a subset of the battery strings **306(1)-306(S)** at a first point in time during assembly of the EV **300,** and then install other and/or a remaining subset of the battery strings **306(1)-306(S)** at a second point in time during assembly, as previously discussed. However, the already installed battery strings **306(1)-306(S)** need to be balanced to the same or substantially the same SOC as the remaining subset of the battery strings **306(1)-306(S)** to be installed.

In this regard, as will be discussed in more detail below, the on-board BMS **310** in **FIG. 3A** is also configured to be placed into an SOC service mode through communication of an SOC service mode request **314** to the on-board BMS **310.** In the SOC service mode, the on-board BMS **310** is configured to control the charging/discharging of installed battery strings **306(1)-306(S)** for the EV battery **304** to a target SOC **316** from the external charging station **312** coupled to the EV battery system **302.** In this manner, any installed battery strings **306(1)-306(S)** in the EV **300** do not have to be physically removed and manually charged/discharged to the target SOC **316** before additional battery strings **306(1)-306(S)** and/or their battery packs **308(1)(4)-308(S)(4)** charged to the target SOC are installed in the EV **300** to achieve balancing of all of the battery strings **306(1)-306(S)** for the EV battery **304.** The existing on-board BMS **310** that is used to normally control charging/discharging of the EV battery **304** during a normal operation mode can also be used to charge/discharge the SOC of any installed battery strings **306(1)-306(S)** and/or their battery packs **308(1)(4)-308(S)(4)** in the SOC service mode. As an example, in the SOC service mode of the on-board BMS **310,** the target SOC **316** to charge/discharge existing battery strings **306(1)-306(S)** already installed in the EV **300** can be chosen to be the SOC of additional, remaining battery strings **306(1)-306(S)** and/or their battery packs **308(1)(4)-308(S)(4)** to be installed in the EV **300.** As an example, before additional battery strings **306(1)-306(S)** and/or their battery packs **308(1)(4)-308(S)(4)** are installed in the EV **300,** the on-board BMS **310** can be configured in the SOC service mode according to an SOC service mode request **314** to use its on-board charging/discharging capability to control power from a connected external charging station **312** to first charge/discharge the installed battery strings **306(1)-306(S)** and/or their battery packs **308(1)(4)-308(S)(4)** to the target SOC **316.** After the installed battery strings **306(1)-306(S)** and/or their battery packs **308(1)(4)-308(S)(4)** reach the target SOC **316,** the on-board BMS **310** discontinues charging/discharging of the installed battery strings **306(1)-306(S)** and/or their battery packs **308(1)(4)-308(S)(4),** and the additional installed battery strings **306(1)-306(S)** and/or their battery packs **308(1)(4)-308(S)(4)** that have been pre-charged to the target SOC **316** can be installed. In this manner, the SOC of the installed battery strings **306(1)-306(S)** and/or their battery packs **308(1)(4)-308(S)(4)** is balanced to the SOC of the additional installed battery strings **306(1)-306(S)** and/or their battery packs **308(1)(4)-308(S)(4)** in the EV **300.** Thus, after the full set of battery strings **306(1)-306(S)** for the EV battery **304** are installed in the EV **300,** all battery strings **306(1)-306(S)** in the EV battery **304** will be balanced to the target SOC **316,** so that the EV battery **304** can operate in a balanced SOC during normal operation from charging and discharging during EV **300** operation.

Before discussing examples of the on-board BMS **310** in **FIGS. 3A** and **3B** being placed into an SOC service mode to control the charging/discharging of installed battery strings **306(1)-306(S)** and/or their battery packs **308(1)(4)-308(S)(4)** in the EV **300,** a discussion of the on-board BMS **310** in the EV **300** and its exemplary components and its operation to perform the charging/discharging in a normal operation mode is first discussed with reference to **FIGS. 3A** and **3B****.**

In this regard, as shown in **FIG. 3A****,** the EV battery system **302** includes a battery control unit **320** that is configured to control the charging/discharging operations. The battery control unit **320** can be processing circuitry, such as a microprocessor, CPU, or microcontroller that is configured to execute program instructions to carry out tasks, or is configured to perform tasks solely with circuits without an execution unit that executes program instructions. The battery control unit **320** is configured to communicate with the external charging station **312** to control charging and discharging operations. For example, the battery control unit **320** can be configured to communicate an SOC of the EV battery **304** through a charge status unit (CSU) **322** configured to be coupled to the external charging station **312** to communicate to the battery control unit **320.** Such communication can instruct the external charging station **312** over a communication line **322** to provide charge energy over conductors **324** to charge the EV battery **304** in a charging operation or to receive discharged energy over conductors **324** from energy discharged from the EV battery **304** in a discharge operation. For example, the external charging station **312** may be compatible with the "Vehicle-to-Grid" (V2G) functionality according to ISO 15118, which defines the communication protocol for bidirectional charging (both charging and discharging) between an EV and a charging station. The conductors **324** are coupled to an inverter circuit **326,** which may be an AC-to-DC inverter circuit, to condition the charge energy or discharge energy to/from the EV battery **304** to provide to a battery management unit (BMU) **328** as part of the on-board BMS **310.** The BMU **328** can be processing circuitry, such as a microprocessor, CPU, or microcontroller that is configured to execute program instructions to carry out tasks, or is configured to perform tasks solely with circuits without an execution unit that executes program instructions. The battery control unit **320** is also configured to interface with one or more vehicle electronic control units (ECUs) **330** to provide diagnostic access to the EV battery system **302.** The battery control unit **320** is also configured to interface with one or more heaters **332(1), 332(2)** to generate heat to warm the EV battery **304** for performance, such as during a normal driving operation or pre-charging operation.

With continuing reference to **FIG. 3A****,** as discussed in more detail below, the BMU **328** is coupled through conductors **325** to the inverter circuit **326** to receive charge energy from the external charging station **312.** The BMU **328** is configured to selectively control the charging of the EV battery **304** from the charge energy received from the inverter circuit **326.** The BMU **328** is electrically coupled to each of the battery strings **306(1)-306(S)** in parallel through respective conductors **334(1)-334(N), 336(1)-336(N)** to distribute charge energy received from the inverter circuit **326** to the battery strings **306(1)-306(S)** for charging, and to distribute discharge energy from the battery strings **306(1)-306(S)** to the inverter circuit **326** when discharging the EV battery **304.** As will be discussed in more detail below, the battery control unit **320** is configured to place the BMU **328** in an SOC service mode in response to receiving the SOC service mode request **314** to charge/discharge installed battery strings **306(1)-306(S)** and/or their battery packs **308(1)(1)-308(1)(4)** - **308(S)(1)-308(S)(4)** to a target SOC **316.** In this regard, an ECU **330** is configured to receive a target SOC **316** input by a technician or other system, such as a diagnostic tool **338** (e.g., laptop computer). In response, the battery control unit **320** is configured to control the BMU **328** to selectively charge/discharge one or more installed battery strings **306(1)-306(S)** and/or their battery packs **308(1)(1)-308(1)(4)** - **308(S)(1)-308(S)(4).** This is also shown in **FIG. 3B****,** wherein the BMU **328** is shown electrically coupled to a battery interface circuit **340** that includes a positive terminal **342** and a negative terminal **344** coupled to a single battery string **306,** through respective conductors **334,** 336. The battery string **306** in **FIG. 3A** can be any of the battery strings **306(1)-306(S)** in **FIG. 3A****,** and the BMU **328** is configured to interface with each of the battery strings **306(1)-306(S)** in **FIG. 3A****.**

Note that the battery control unit **320** and BMU **328** in **FIGS. 3A** and **3B** are shown as separate circuit devices, but each circuit device could be provided in a single circuit device as a processing circuit that is configured to perform the aforementioned functions.

The BMU **328** in this example is configured to detect the SOC of each battery string **306(1)-306(S)** by sensing the open circuit voltage (OCV) of a respective battery string **306(1)-306(S).** In this manner, the BMU **328** and/or the battery control unit **320** can determine the SOC of each battery string **306(1)-306(S)** to in turn make decisions about charging and discharging operations, including in an SOC service mode. For example, as shown in **FIG. 3B****,** the BMU **328** and its terminals **342, 344** are coupled to respective positive and negative conductors **334, 336** of a battery string **306** to be able to sense the OCV between the positive and negative terminals **342, 344.** **FIG. 4** is a graph **400** illustrating an exemplary voltage curves **402, 404** showing a relation between OCV and SOC of respective lithium iron phosphate (LFP) and lithium nickel manganese cobalt (NMC) battery cells, and which can be used by the on-board BMS **310** (e.g., its BMU **328**) in **FIGS. 3A** and **3B** to correlate the OCV of a battery to its SOC. Note that the batteries/battery cells disclosed herein can be any type of battery/battery cell desired.

**FIG. 5A** illustrates the EV battery system **302** in **FIG. 3A** with a single installed battery string **306(1)** having an initial SOC of 30%. In this example, it is desired to install other additional battery strings **306(2)-306(S)** in the EV battery **304** that have been previously charged (i.e., pre-charged) to a 50% SOC. For example, the EV battery system **302** shown in **FIG. 5A** may be at a point in time (e.g., a first point or location in an assembly process) where only the single battery string **306(1)** with its battery packs **308(1)(1)-308(1)(4)** has been installed in the EV **300,** which may have been charged to only a 30% SOC or may have lost charge down to a 30% SOC. In this example, it is desired to raise the SOC of the installed battery string **306(1)** from 30% to 50% before installing the other battery strings **306(2)-306(S)** that were pre-charged to a 50% SOC in this example, so that the installed battery string **306(1)** is balanced in charge to the other battery strings **306(2)-306(S)** to be installed for the EV battery **304.**

In this regard, as shown in **FIG. 5A****,** the on-board BMS **310** in **FIGS. 3A** and **3B** is configured to be placed into an SOC service mode according to the received SOC service mode request **314** to charge the installed battery string **306(1)** to a received target SOC **316,** which in this example is 50% SOC. The BMU **328** in this example includes a memory **500** that is configured to store the received target SOC **316** at a target SOC **502** and store an indication of the SOC service mode from the received SOC service mode request **314** as an SOC service mode **504.** For example, the SOC service mode **504** may be a bit that indicates an SOC service mode in one logic state (e.g., a '1' bit) and a normal operating mode in another logic state (e.g., a '0' bit). In this example, the on-board BMS **310** is configured to charge the installed battery string **306(1)** to a true SOC according to the target SOC **502** and a true maximum SOC **506** stored in memory **500** so that the battery string **306(1)** will be charge balanced with other battery strings **306(2)-306(S)** that were pre-charged at a 50% SOC. For example, the on-board BMS **310** in **FIG. 3A** may be configured with a perceived maximum SOC **508** (e.g., 90%) enforced for normal battery charging that has a 10% SOC difference to a perceived maximum SOC target (e.g., 100%) that is presented to the operator of the EV **300.** This is so that the EV battery **304** can never be charged to its true maximum SOC during normal charging operations to protect the EV battery **304.** However, in the SOC service mode, the target SOC **316** desired for the installed battery string **306(1)** may need be a true SOC target. This may be because the additional battery strings **306(2)-306(S)** to be balanced to the installed battery string **306(1)** may have their SOCs measured based on a true SOC target, and thus the operator of the SOC service mode needs to have access to the on-board BMS **310** to charge/discharge the installed battery string **306(1)** to its true SOC. In this regard, the true maximum SOC **506** is used to charge the installed battery string **306(1)** in the SOC service mode. In this example, the true maximum SOC **506** may be 100%, which means the installed battery string **306(1)** can be charged to a true SOC that matches the target SOC **502** (e.g., 50%). Otherwise, in a normal charging operation, the EV battery **304** would only be charged based on the perceived maximum SOC **508,** which in this example would be 90% of target SOC **502** at 50%, or 45% SOC.

With continuing reference to **FIG. 5A****,** in this example, in response to receiving the SOC service mode request **314,** the BMU **328** is configured to detect the presence of an installed battery strings in the EV battery **304,** which in this example is the single battery string **306(1).** The BMU **328** is configured to detect the presence of the installed batteries by detecting the OCV in the plurality of battery interface circuits ) relay circuit **516** coupled inline to the ground conductor **512** to complete an electrical connection between the BMU **328** and conductors **334(1), 336(1)** - **334(N), 336(N)** of battery strings **306** coupled to the respective battery interface circuits **340(1)-340(S).** In this example, the BMU **328** is communicatively coupled to the relay circuits **514(1)-514(S), 516** through respective communication lines **518(1)-518(N), 520** to be able to control the opening and closing of the relay circuits **514(1)-514(S), 516.** In this example, only the single battery string **306(1)** is coupled to its respective battery interface circuit **340(1)** when the relay circuit **514(1)** is closed, so the BMU **328** will only detect the single battery string **306(1)** based on a detected OCV on the conductors **334(1), 336(1)** coupled to the battery interface circuit **340(1).**

In the SOC service mode, for the detected battery string **306(1)** installed in the EV battery **304,** the BMU **328** detects the SOC of the battery string **306(1)** based on its detected OCV, such as using the SOC/OCV data pairs **406** from **FIG. 4B** stored in memory **500.** The BMU **328** and/or the battery control unit **320** is configured to determine if the measured SOC of the installed battery string **306(1)** is outside of the target SOC **502** by more than a predetermined amount (e.g., 2%). For example, the measured SOC of the battery string **306(1)** may be 30% and the target SOC **502** may be 50% in the SOC service mode. In response to determining that the SOC of the installed battery string **306(1)** is outside of the target SOC **502,** the BMU **328** and/or the battery control unit **320** cause the battery string **306(1)** to be regulated, which in this example is charged, from power received from the external charging station **312** conditioned by the inverter circuit **326 (****FIG. 3A****)** until the SOC of the battery string **306(1)** reaches or substantially reaches the target SOC **502** of 50%. This is shown in EV battery system **302** in **FIG. 5B****.** Thereafter, the BMU **328** can control the relay circuits **514(1)-514(S), 516** to be opened.

Note that if the battery string **306(1)** had had an SOC (e.g., 70%) above the target SOC **502** (e.g., 50%), the BMU **328** and/or the battery control unit **320** would have caused the battery string **306(1)** to be discharged to the target SOC **502.** In this instance, the discharging of the installed battery string **306(1)** may be accomplished by the on-board BMS **310** causing other power consuming devices in the EV **300** to be activated to consume power. The on-board BMS **310** can monitor the SOC of the installed battery string **306(1)** until its SOC reaches the target SOC **502.** Thereafter, the BMU **328** can control the relay circuits **514(1)-514(S), 516** to be opened.

Note that the BMU **328** and/or the battery control unit **320** could be configured to control the charge regulation (i.e., charge or discharge) of the installed battery string **306(1)** in the SOC service mode. If the battery control unit **320** controls the charge regulation in the SOC service mode, the BMU **328** would be configured to communicate over a communication line **518** to the BMU **328** to control the relay circuits **514(1)-514(S), 516** and measure the SOC of the installed battery string **306(1).** The BMU **328** could then communicate the measured SOC of the installed battery string **306(1)** to the battery control unit **320.** The battery control unit **320** could have access to the memory **500** to determine if the installed battery string **306(1)** was outside of the target SOC **502** and if not, control the regulation of charge to the installed battery string **306(1).**

Note that if the on-board BMS **310** is not in the SOC service mode, the on-board BMS **310** is configured to charge/discharge a fully installed EV battery **304** in response to receiving a charging request. In response, the on-board BMS **310** can control the relay circuits **514(1)-514(S), 516** of the respective battery interface circuits **340(1)-340(S)** to couple the EV battery **304** to the inverter circuit **326** to charge the EV battery **304** to a target SOC **502** based on the perceived maximum SOC **508.**

**FIG. 5C** illustrates the EV battery system **302** in **FIG. 5B** after additional battery strings **306(2)-306(S)** are installed in the EV battery **304** after the single installed battery string **306(1)** was controlled by the on-board BMS **310** to have an SOC of the target SOC **502** matching after completion of the SOC service mode. In this example, the SOC of all of the battery strings **306(1)-306(S)** of the EV battery **304** are 50% and thus balanced.

**FIG. 6** is a flowchart illustrating an exemplary SOC service mode process that can be performed by an on-board BMS in an EV battery system configured in an SOC service mode, including but not limited to the on-board BMS **310** in the EV battery system **302** in **FIGS. 3A****,** **3B****,** and **5A****-5C,** to regulate the SOC of an installed batteries for an EV battery to a target SOC from an external charging station coupled to the EV battery system. In this regard, the SOC service mode process **600** in **FIG. 6** is described with regard to the on-board BMS 310 in the EV battery system **302** in **FIGS. 3A****,** **3B****,** and **5A****-5C,** but such is not limiting.

In this regard, a first step in the SOC service mode process **600** can be to regulate energy discharged from an EV battery **304** to at least one electric motor **106** in an EV **300** (block **602 in** **FIG. 6****).** A next step in the SOC service mode process **600** can be to store a target SOC **502** for an SOC service mode **504** in the EV **300** based on a true maximum SOC **506** of the EV battery **304** (block **604** in **FIG. 6****).** A next step in the SOC service mode process **600** can be to receive a SOC service mode request **314** (block **606** in **FIG. 6**). In response to the SOC service mode request **314** (block **608** in **FIG. 6**), a next step in the SOC service mode process **600** can be to detect each coupled battery string **306(1)-306(S)** of the plurality of battery strings **306(1)-306(S)** coupled to a battery interface circuit **340(1)-340(S)** of the plurality of battery interface circuits **340(1)-340(S)** (block **610** in **FIG. 6**). For each detected coupled battery string **306(1)-306(S)** (block **612** in **FIG. 6**), next steps in the SOC service mode process **600** can be to determine an SOC of the coupled battery string **306(1)-306(S)** (block **614** in **FIG. 6**), and determine the SOC of the coupled battery string **306(1)-306(S)** outside the target SOC **502** (block **616** in **FIG. 6**). In response to the SOC of the coupled battery string **306(1)-306(S)** being outside the target SOC **502** (block **618** in **FIG. 6**), a next step in the SOC service mode process **600** can be to regulate the SOC of the coupled battery string **306(1)-306(S)** to the target SOC **502** (block **620** in **FIG. 6**).

Note that in **FIG. 5A****,** the SOC service mode is performed by the on-board BMS **310** with only the single battery string **306(1)** installed before other additional battery strings **306(2)-306(S)** are installed, like shown in **FIG. 5C****.** However, such is not required. The on-board BMS **310** could be configured to perform the SOC service mode only after all battery strings **306(1)-306(S)** are installed, like shown in **FIG. 5C****.** For example, the on-board BMS **310** can be configured to measure the OCVs of each of the battery strings **306(1)-306(S)** installed in the SOC service mode, and perform the SOC service mode to charge/discharge only those battery strings **306(1)-306(S)** that are outside of the target SOC **502.** For example, the on-board BMS **310** can selectively control the closing of the relay circuits **514(1)-514(S), 516** to measure the OCV of any installed battery strings **306(1)-306(S)** to detect installed battery strings **306(1)-306(S)** and to determine their SOCs based on their measured OCVs. For example, if the installed battery string **306(1)** is determined based on its measured OCV to have an SOC of 30%, the other installed battery strings **306(2)-306(S)** are determined based on their measured OCV to have a SOC of 50%, and the target SOC **502** is 50%, the on-board BMS **310** can selectively close/keep closed the relay circuits **514(1), 516** for the battery interface circuit **340(1)** coupled to the first battery string **306(1)** and open the other relay circuits **514(2)-514(S)** for the other battery interface circuits **340(2)-340(S)** coupled to the other battery strings **306(2)-306(S)** in the SOC service mode. The on-board BMS **310** can then charge the first battery string **306(1)** to a 50% SOC. As discussed above, in an example, the charging of the battery string **306(1)** can be based on the true maximum SOC **506** for the battery string **306(1).** In this manner, the on-board BMS **310** is configured to balance the battery string **306(1)** to the target SOC **502** without affecting the SOC of the other installed battery strings **306(2)-306(S)** which already have an SOC of the target SOC **502,** and the SOC service mode discontinued.

In another example, if in an SOC service mode, if the installed battery string **306(1)** is determined by the on-board BMS **310** to have an SOC of 30% based on its measured OCV, if the other battery strings **306(1)-306(S)** are determined to have an SOC of 70% based on their measured OCVs, and the target SOC **502** is 50%, the on-board BMS **310** can still balance the SOC of all the battery strings **306(1)-306(S)** to the target SOC **502** of 50%. In this regard, the on-board BMS **310** can first selectively close the relay circuits **514(1), 516** for the battery interface circuit **340(1)** coupled to the first battery string **306(1)** and open the other relay circuits **514(2)-514(S)** for the other battery interface circuits **340(2)-340(S)** coupled to the other battery strings **306(2)-306(S)** in the SOC service mode to only charge the first battery string **306(1)** to a 50% SOC. As discussed above, in an example, the charging of the battery string **306(1)** is based on the true maximum SOC **506** for the battery string **306(1).** This is because the other battery strings **306(2)-306(S)** need to be discharged for their SOC to reach the target SOC **502,** not charged. In this manner, the on-board BMS **310** is configured to balance the battery string **306(1)** to the target SOC **502.** Then, the on-board BMS **310** can selectively close the relay circuits **514(2)-514(S), 516** for the battery interface circuits **340(2)-340(S)** coupled to the respective battery strings **306(2)-306(S)** and open the relay circuit **514(1)** for the battery interface circuit **340(1)** coupled to the battery strings **306(1)** at the target SOC **502** in the SOC service mode to discharge the other battery strings **306(2)-306(4)** to a 50% SOC without affecting the SOC of the battery string **306(1)** with an SOC at the target SOC **502,** and the SOC service mode discontinued. As discussed above, in an example, the discharging of the battery strings **306(2)-306(S)** can be based on the true maximum SOC **506** for the battery strings **306(2)-306(4).**

In yet another example, if in an SOC service mode, if the installed battery string **306(1)** is determined by the on-board BMS **310** to have a SOC of 30% based on its measured OCV, and the other battery strings **306(1)-306(S)** are determined to have an SOC of 40% based on their measured OCVs, and the target SOC **502** is 50%, the on-board BMS **310** can still balance the SOC of all the battery strings **306(1)-306(S)** to the target SOC **502** of 50%. In this regard, the on-board BMS **310** can selectively close all of the relay circuits **514(1)-514(S), 516** for the battery interface circuits **340(1)-340(S)** coupled to the respective battery strings **306(1)-306(S)** in the SOC service mode since all the battery strings **306(1)-306(S)** need to be charged for their SOC to reach the target SOC **502.** The SOC of the battery strings **306(2)-306(S)** will reach the target SOC **502** of 50% before the SOC of the battery string **306(1)** reaches the target SOC **502** of 50%, in this example. As discussed above, in an example, the charging of the battery string **306(1)** can be based on the true maximum SOC **506** for the battery string **306(1).** Once the SOC of the battery strings **306(2)-306(S)** will reach the target SOC **502** of 50%, the on-board BMS **310** can be configured to open the relay circuits **514(2)-514(S)** while keeping the relay circuit **514(1)** closed. Thus, the continued charging will only charge the battery string **306(1)** with the other battery strings **306(2)-306(S)** having their SOC at the target **SOC 502** unaffected. As discussed above, in an example, the continued charging of the battery strings **306(2)-306(S)** can be based on the true maximum SOC **506** for the battery string **306(1).** Then, the on-board BMS **310** can selectively open the relay circuit **514(1)** for the battery interface circuit **340(1)** coupled to the battery string **306(1)** once its SOC is determined to reach the target SOC **502,** and the SOC service mode discontinued.

In summary, in the SOC service mode, the on-board BMS **310** is configured to detect any number of batteries/battery strings **306(1)-306(S)** installed in its EV battery **304,** and to determine if their SOC is outside of the target SOC based on their measured OCVs. The on-board BMS **310** can then selectively charge/discharge the batteries/battery strings **306(1)-306(S)** to the target SOC **502** individually or in subsets according to charge/discharge groupings, until the SOCs of the installed batteries/battery strings **306(1)-306(S)** reach the target SOC. As discussed above, in an example, the charging/discharging is based on a true maximum SOC **506** for the batteries/battery strings **306(1)-306(S).**

**FIG. 7** is a flowchart illustrating another exemplary SOC service mode process **700** that can be performed by an on-board BMS in an EV battery system, including but not limited to the on-board BMS **310** in an EV battery system **302** in **FIGS. 3A****,** **3B****,** and **5A****-5C.** The SOC service mode process **700** in **FIG. 7** supports the charging/discharging of any number of batteries/battery strings installed in an EV with the on-board BMS and with any number of batteries/battery strings being at different starting SOCs before being balanced to a target SOC in an SOC service mode. In this regard, the SOC service mode process **700** in **FIG. 7** is described with regard to the on-board BMS **310** in the EV battery system **302** in **FIGS. 3A****,** **3B****,** and **5A****-5C,** but such is not limiting.

In this regard, as shown in **FIG. 7****,** in response to the on-board BMS **310** entering the SOC service mode (block **702** in **FIG. 7**), a next step in the SOC service mode process **700** can be to detect any battery strings **306(1)-306(S)** that have an SOC based on its measured OCV that deviates from the target SOC **502** (block **704** in **FIG. 7**). If a battery string **306(1)-306(S)** is determined to have an SOC that is below the target SOC **502** (i.e., too low) (block **706** in **FIG. 7**), the on-board BMS **310** is configured to charge the battery string(s) **306(1)-306(S)** that has an SOC below the target SOC (block **708** in **FIG. 7**). If the external charging station **712** is not connected to the EV **300** (block **710** in **FIG. 7**), the SOC service mode does not continue until the external charging station **712** is connected to the EV **300.** Thereafter, the on-board BMS **310** selectively closes the relay circuits **514(1)-514(S)** for respective battery strings **306(1)-306(S)** that need to be charged and opens the relay circuits **514(1)-514(S)** for respective battery strings **306(1)-306(S)** that do not need to be charged (block **714** in **FIG. 7**). Then, the on-board BMS **310** monitors the OCV of the respective battery strings **306(1)-306(S)** being charged (block **716** in **FIG. 7**) to determine if their SOCs have reached the target SOC **502** and/or matches the SOC of the other battery strings **306(1)-306(S)** not charged (block **718** in **FIG. 7**). If not, the process **700** goes back to block **714.** Once the battery strings **306(1)-306(S)** being charged reach the target SOC **502** (block **718** in **FIG. 7**), the SOC service mode can be discontinued (block **720** in **FIG. 7**) and/or go back to block **706.**

However, if it was determined in block **706** in **FIG. 7** that any battery strings **306(1)-306(S)** were determined to have an SOC above the target SOC **502** (i.e., too high) (block 706 in **FIG. 7**), the on-board BMS **310** is configured to discharge the battery string(s) **306(1)-306(S)** that have an SOC above the target SOC (block **722** in **FIG. 7**). If the external charging station **712** is connected to the EV **300** (block **724** in **FIG. 7**), the SOC service mode does not continue until the external charging station **712** is disconnected from the EV **300.** Thereafter, the on-board BMS **310** selectively closes the relay circuits **514(1)-514(S)** for respective battery strings **306(1)-306(S)** that need to be discharged and opens the relay circuits **514(1)-514(S)** for respective battery strings **306(1)-306(S)** that do not need to be discharged (block **726** in **FIG. 7**). Then, the on-board BMS **310** monitors the OCV of the respective battery strings **306(1)-306(S)** being discharged (block **728** in **FIG. 7**) to determine if their SOCs have reached the target SOC **502** and/or match the SOC of the other battery strings **306(1)-306(S)** not discharged (block **730** in **FIG. 7**). If not, the process **700** goes back to block **726.** Once the battery strings **306(1)-306(S)** being discharged reaches the target SOC **502** (block **730** in **FIG. 7**), the SOC service mode can be discontinued (block **732** in **FIG. 7**).

**FIG. 8** is a schematic diagram of the exemplary EV battery system **302** in **FIGS. 3A** and **5A** with the battery string **306(1)** of the EV battery **304** detecting voltage instability based on an instability in its measured OCV by the on-board BMS **310.** For example, the battery string **306(1)** may have an unstable OCV based on one or more of its battery packs **308(1)(1)-308(1)(4)** having an unstable voltage during charging or discharging. In this regard, it may be difficult or not possible to accurately detect the SOC of the battery string **306(1)** to perform charging/discharging of the battery string **306(1)** in an SOC service mode at a given charge/discharge rate. A battery's charge/discharge rate affects its voltage by influencing how quickly energy is pushed or released from its battery cells. However, if the charge/discharge rate of the battery string **306(1)** with a detected unstable OCV is slowed, this may result in a more stable OCV for the battery string **306(1)** that would then allow an accurate determination of the SOC of the battery string **306(1)** with an initially unstable voltage during the SOC service mode.

In this regard, in an example, in response to the on-board BMS **310** detecting an unstable voltage in the battery string **306(1)** being charged/discharged in the SOC service mode, the on-board BMS **310** can be configured to control the external charging station **312** (see **FIG. 3A**) to reduce the rate of charge/discharge (e.g., by reducing charging current). In this manner, if the voltage of the battery string **306(1)** in the EV battery **304** initially detected as having an unstable voltage during the SOC service mode becomes stable in the SOC service mode after the rate of regulating charge is reduced (i.e., charge/discharge rate is reduced), the on-board BMS **310** can continue with the SOC service mode so that the installed battery string **306(1)** reaches the target SOC, as desired, like previously described above in regard to **FIG. 5A** and the process **600** in **FIG. 6****.** This is because by reducing the charge regulation rate, this may cause the OCV of the installed battery string **306(1)** to once again become stable to measure so that the on-board BMS **310** can perform the SOC service mode to charge/discharge the battery string **306(1)** to the target SOC **502.** The battery string **306(1)** that is detected as having an unstable OCV can be subsequently replaced after the SOC service mode is completed, if desired.

Note that if the on-board BMS **310** continues to detect unstable voltage in an installed battery string **306(1)-306(S)** in the EV battery **304** during charging/discharging in the SOC service mode, this may be an indication that one or more battery cells in one or more respective battery packs **308(1)(1)-308(1)(N)** - **308(S)(1)-308(S)(4)** are bad, potentially caused by damage, aging, internal short circuits, and/or poor connectivity. This is shown by example in **FIG. 9****,** which illustrates the EV battery system **302** with a battery string **306** that has a bad battery pack **308(2).** The battery string in **FIG. 9** can be any of the battery strings **306(1)-306(S)** in the EV battery **304** in **FIG. 3B****.** As shown in **FIG. 9****,** the battery packs **308(1)(1)-308(1)(N)** - **308(S)(1)-308(S)(4)** may also be configured with respective charge sensing circuits **900(1)-900(4)** that are configured to internally monitor the battery cells of its respective battery pack **308(1)-308(4)** and detect bad battery cells and communicate same to the BMU **328** over respective communication lines **902(1)-902(4).** For example, **FIG. 10** is a schematic diagram of an exemplary battery pack **308** that can be provided in a battery string **306(1)-306(B)** in the EV battery **304** in the EV battery system **302** in **FIG. 3A****,** wherein the battery pack **308** includes a charge sensing circuit **900** configured to detect bad battery cells **1000** within its battery pack **308** and report a bad battery cell condition of the battery pack **308** to the BMU **328** of the on-board BMS **310,** as shown in **FIG. 9****.**

In any case, whether a battery pack (e.g., battery pack **308(2))** is detected with a bad battery cell(s) either through unstable OCV and/or self-reporting through a charge-sensing circuit **900(1)-900(4),** it may be undesirable to charge/discharge the battery string **306** with the bad battery pack **308(1)-308(4)** having a detected bad battery cell(s) for safety reasons. However, the on-board BMS **310** is configured to charge or discharge the entire battery string **306** and each of the battery packs **308(1)-308(4)** in the battery string **306** connected in series.

In another example, to provide for the ability to charge/discharge the battery string **306** with one or more bad battery packs **308(1)-308(S)** as shown in **FIG. 9****,** the on-board BMS **310** can be configured to internally provide/cause a bypass connection **904** to be established around the detected bad battery pack (e.g., battery pack **308(2)**) so that the remaining battery packs with good battery cells (e.g., battery packs **308(1), 308(3)-308(4)**) are connected in series in the SOC service mode. The on-board BMS **310** can then, still in the SOC service mode, reduce the charging/discharge voltage proportional to the reduction in total capacity of the battery string **306** containing the bad battery pack **308(1)-308(4).** For example, with the battery string **306** in **FIG. 9** with its four (4) battery packs **308(1)-308(4),** each of 100 Volts (V) voltage rating connected in series, the battery string **306** has a 400 V total voltage rating. If battery pack **308(2)** is disconnected or removed from the battery string **306,** the on-board BMS **310** can be configured to reduce the charging voltage by one-fourth (¼) for the remaining three (3) battery packs **308(1), 308(3)-308(4)** to a 300 V voltage rating to normalize the charging current to compensate for the removed battery pack **308(2)** when charging is needed for the battery to reach the target SOC **502.**

In this manner, the remaining battery packs **308(1), 308(3)-308(4)** in the battery string **306** are charged at the same charging rate in the SOC service mode as before until the target SOC **502** is reached, so as to not overstress the remaining battery packs **308(1), 308(3)-308(4)** in the battery string **306.** In one example, the on-board BMS **310** can be configured to reduce the charging/discharging voltage by communicating to the external charging station **312** to reduce its charging/discharging voltage. In another example, the on-board BMS **310** can be configured to internally reduce the charging/discharging voltage, such as through the inverter circuit **326.** The bad battery pack **308(2)** can later be removed from the EV battery **304** manually after the SOC service mode is completed, with the bad battery pack **308(2)** being replaced with a new battery pack that has been pre-charged to the target SOC **502.** This then returns its battery string **306** to full capacity.

Note that in an alternative aspect, the battery strings **306(1)-306(S)** in **FIGS. 3A** and **3B** could be individual single battery packs **308** that are connected in parallel to the on-board BMS **310.** In this regard, the above descriptions and functionalities can be performed like described, but with a single battery pack **308** being substituted for a battery string **306(1)-306(S).**

**FIG. 11** is a block diagram of an exemplary computer system **1100** that can be included in an EV battery system and/or an on-board BMS of an EV battery system, including but not limited to the EV battery system **302** and on-board BMS **310 in** **FIGS. 3A-3B****,** **5A-5C****,** **8****,** and **-****9****,** and configured to regulate the charge of an installed batteries for an EV battery to a target SOC from an external charging station coupled to the EV battery system in an SOC service mode, including but not limited to the SOC service mode processes in **FIGS. 6** and **7****.**

The computer system **1100** is adapted to execute instructions from a computer-readable medium to perform these and/or any of the functions or processing described herein. The computer system **1100** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **1100** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), automatic turn signal cancellation system, processor device, processing circuitry, etc., includes reference to one or more such devices to individually or jointly execute a set (or multiple sets) of instructions to perform any one or more of the methodologies discussed herein. For example, a control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **1100** may comprise at least one computing device or electronic device capable of including firmware, hardware, and/or executing software instructions to implement the functionality described herein. The computer system **1100** may include processing circuitry **1102** (e.g., processing circuitry including one or more processor devices or control units) that could be the on-board BMS **310,** the battery control unit **320** and/or the BMU **328** in **FIGS. 3A-3B****,** **5A-5C****,** **8****,** and **9****.** The computer system **1100** also includes a memory **1104** that could store the computer program instructions and a system bus **1106.** The computer system **1100** may include at least one computing device having the processing circuitry **1102.** The system bus **1106** provides an interface for system components including, but not limited to, the memory **1104** and the processing circuitry **1102.** The processing circuitry **1102** may include any number of hardware components for conducting data or signal processing or for executing computer code stored in memory **1104,** including the computer program instructions executed by the on-board BMS **310,** the battery control unit **320** and/or the BMU **328** in **FIGS. 3A-3B****,** **5A-5C****,** and **8-11****.** The processing circuitry **1102** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **1102** may further include computer executable code that controls operation of the programmable device.

The system bus **1106** may be any of several types of bus structures that may further interconnect to a memory bus (with or without a memory controller), a peripheral bus, and/or a local bus using any of a variety of bus architectures. The memory **1104** may be one or more devices for storing data and/or computer code for completing or facilitating methods described herein. The memory **1104** may include database components, object code components, script components, or other types of information structure for supporting the various activities herein. Any distributed or local memory device may be utilized with the systems and methods of this description. The memory **1104** may be communicably connected to the processing circuitry **1102** (e.g., via a circuit or any other wired, wireless, or network connection) and may include computer code for executing one or more processes described herein. The memory **1104** may include non-volatile memory **1108** (e.g., read-only memory (ROM), erasable programmable read-only memory (EPROM), electrically erasable programmable read-only memory (EEPROM), etc.), and volatile memory **1110** (e.g., random-access memory (RAM)), or any other medium which can be used to carry or store desired program code in the form of machine-executable instructions or data structures and which can be accessed by a computer or other machine with processing circuitry **1102.** A basic input/output system (BIOS) **1112** may be stored in the non-volatile memory **1108** and can include the basic routines that help to transfer information between elements within the computer system **1100.**

The computer system **1100** may further include or be coupled to a non-transitory computer-readable storage medium such as the storage device **1114,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **1114** and other drives associated with computer-readable media and computer-usable media may provide non-volatile storage of data, data structures, computer-executable instructions (e.g., computer program instructions **507**), and the like.

Computer-code which is hard or soft coded may be provided in the form of one or more modules. The module(s) can be implemented as software and/or hard-coded in circuitry to implement the functionality described herein in whole or in part. The modules may be stored in the storage device **1114** and/or in the volatile memory **1110,** which may include an operating system **1116** and/or one or more program modules **1118.** All or a portion of the examples disclosed, including instructions executed by the on-board BMS **310,** the battery control unit **320,** and/or the BMU **328** herein may be implemented as a computer program **1120** stored on a transitory or non-transitory computer-usable or computer-readable storage medium (e.g., single medium or multiple media), such as the storage device **1114,** which includes complex programming instructions (e.g., complex computer-readable program code) to cause the processing circuitry **1102** to carry out actions described herein. Thus, the computer-readable program code of the computer program **1120** can comprise software instructions (e.g., computer program instructions) for implementing the functionality of the examples described herein when executed by the processing circuitry **1102.** In some examples, the storage device **1114** may be a computer program product (e.g., readable storage medium) storing the computer program **1120** thereon, where at least a portion of a computer program **1120** may be loadable (e.g., into a processor) for implementing the functionality of the examples described herein when executed by the processing circuitry **1102.** The processing circuitry **1102** may serve as a controller or control system for the computer system **1100** that is to implement the functionality described herein.

The computer system **1100** may include an input device interface **1122** configured to receive input and selections to be communicated to the computer system **1100** when executing instructions, such as from a keyboard, mouse, touch-sensitive surface, etc. Such input devices may be connected to the processing circuitry **1102** through the input device interface **1122** coupled to the system bus **1106** but can be connected through other interfaces, such as a parallel port, an Institute of Electrical and Electronic Engineers (IEEE) 1394 serial port, a Universal Serial Bus (USB) port, an IR interface, and the like. The computer system **1100** may include an output device interface **1124** configured to forward output, such as to a display, a video display unit (e.g., a liquid crystal display (LCD) or a cathode ray tube (CRT)). The computer system **1100** may include a communications interface **1126** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Implementation examples are described in the following numbered clauses:
Example 1: An on-board battery management system (BMS) in an electric vehicle (EV), the on-board BMS comprising processing circuitry configured to:
   regulate energy discharged from an electric vehicle (EV) battery to at least one electric motor in an EV, the EV battery comprising a plurality of battery interface circuits connected in parallel and each configured to be coupled to a battery of a plurality of batteries;
   store a target state-of-charge (SOC) for an SOC service mode in the EV based on a true maximum SOC of the EV battery;
   receive a request for the SOC service mode; and
   in response to the SOC service mode:
      detect each coupled battery of the plurality of batteries coupled to a battery interface circuit of the plurality of battery interface circuits; and
      for each detected coupled battery:
         determine an SOC of the coupled battery;
         determine the SOC of the coupled battery outside the target SOC; and
         in response to the SOC of the coupled battery outside the target SOC:
            regulate the SOC of the coupled battery to the target SOC.
Example 2: The on-board BMS of Example 1, wherein the processing circuitry is further configured to:
   receive a request for a battery charging mode in the EV; and
   in response to receiving the request for the battery charging mode:
      charge the EV battery from power received from an external charging station to the target SOC based on a perceived maximum SOC for the EV battery less than the true maximum SOC.
Example 3: The on-board BMS of any of Examples 1-2, wherein the plurality of batteries comprises a plurality of battery packs connected in parallel.
Example 4: The on-board BMS of any of Examples 1-2, wherein the plurality of batteries comprises a plurality of battery strings connected in parallel, wherein each battery string of the plurality of battery strings comprises a plurality of battery packs connected in series.
Example 5: The on-board BMS of any of Examples 1-4, wherein the processing circuitry is configured to, in response to the SOC service mode, for each coupled battery:
   determine the SOC of the coupled battery outside the target SOC by being configured to determine the SOC below the target SOC; and
   in response to determining the SOC of the coupled battery below the target SOC: charge the coupled battery to be within the target SOC from power from an external charging station coupled to the EV.
Example 6: The on-board BMS of any of Examples 1-5, wherein the processing circuitry is configured to, in response to the SOC service mode, for each coupled battery:
   determine the SOC of the coupled battery outside the target SOC by being configured to determine the SOC is above the target SOC; and
   in response to determining the SOC of the coupled battery above the target SOC: discharge the coupled battery to be within the target SOC.
Example 7: The on-board BMS of Example 6, wherein the processing circuitry is configured to, in response to the SOC service mode, for each coupled battery:
   discharge the coupled battery to be within the target SOC by activating one or more power consuming devices in the EV.
Example 8: The on-board BMS of any of Examples 1-7, wherein in response to the SOC service mode, for each coupled battery, the processing circuitry is:
   further configured to sense open circuit voltage of the coupled battery; and
   configured to determine the SOC of the coupled battery based on the open circuit voltage at the battery interface circuit coupled to the coupled battery.
Example 9: The on-board BMS of Example 8, wherein the processing circuitry is configured to detect each coupled battery of the plurality of batteries coupled to a battery interface circuit of the plurality of battery interface circuits based on the sensed open circuit voltage at each battery interface circuit of the plurality of battery interface circuits.
Example 10: The on-board BMS of Example 9, wherein the plurality of battery interface circuits comprises a plurality of relay circuits; and
   in response to the SOC service mode, the processing circuity is:
   further configured to close the plurality of relay circuits to couple each coupled battery to the processing circuitry; and
   configured to detect each coupled battery when the plurality of relay circuits is closed.
Example 11: The on-board BMS of Example 10, wherein in response to the SOC service mode, and for each coupled battery, the processing circuity is further configured to, in response to the SOC of the coupled battery being within the target SOC:
   open a relay circuit of the plurality of relay circuits coupled to the coupled battery to decouple the battery from the processing circuitry.
Example 12: The on-board BMS of any of Examples 8-11, wherein the processing circuitry is further configured to, in response to the SOC service mode, for each coupled battery:
   determine whether there is an instability in the sensed open circuit voltage of the coupled battery; and
   in response to determining an instability in the sensed open circuit voltage of the coupled battery:
      reduce a regulation rate of the regulation of the SOC of the battery to the target SOC.
Example 13: The on-board BMS of Example 12, wherein the processing circuitry is configured to, in response to the SOC service mode, for each coupled battery:
   determine the SOC of the coupled battery outside the target SOC by being configured to determine the SOC below the target SOC;
   in response to determining the SOC of the coupled battery is below the target SOC: charge the coupled battery to be within the target SOC; and
   in response to determining the instability in the sensed open circuit voltage of the coupled battery:
      reduce a charge rate of the charge of the coupled battery to be within the target SOC.
Example 14: The on-board BMS of any of Examples 12-13, wherein the processing circuitry is configured to, in response to the SOC service mode, for each coupled battery:
   determine the SOC of the coupled battery is outside the target SOC by being configured to determine the SOC above the target SOC;
   in response to determining the SOC of the coupled battery above the target SOC: discharge the coupled battery to be within the target SOC; and
   in response to determining the instability in the sensed open circuit voltage of the coupled battery:
      reduce a discharge rate of the discharge of the coupled battery to be within the target SOC.
Example 15: The on-board BMS of Example 4, wherein the processing circuitry is further configured to, in response to the SOC service mode, for each coupled battery:
   determine one or more battery packs among the plurality of battery packs in a coupled battery string have one or more defective battery cells; and
   in response to determining the coupled battery string has one or more battery packs that have one or more defective battery cells:
      decouple the one or more battery packs from the coupled battery string with the other battery packs of the plurality of battery packs connected in series; and
      reduce a regulation voltage used to regulate the SOC of the coupled battery to the target SOC based on a reduced battery capacity of the coupled battery string from the decoupled one or more battery packs from the coupled battery string.
Example 16: The on-board BMS of Example 15, wherein the processing circuitry is configured to reduce the regulation voltage by being configured to reduce a regulation voltage used to regulate the SOC of the coupled battery to the target SOC proportional to the reduced battery capacity of the coupled battery string from the decoupled one or more battery packs from the coupled battery string.
Example 17: A vehicle comprising the on-board battery management system (BMS) of any of Examples 1-16.
Example 18: A computer-implemented method of a processing circuitry in an on-board battery management system (BMS) in an electric vehicle (EV) managing a state-of-charge (SOC) in an EV battery comprising a plurality of battery interface circuits connected in parallel and each configured to be coupled to a battery of a plurality of batteries, comprising:
   regulating energy, by the processing circuitry, discharged from the EV battery to at least one electric motor in the EV;
   storing, by the processing circuitry, a target state-of-charge (SOC) for an SOC service mode in the EV based on a true maximum SOC of the EV battery;
   receiving, by the processing circuitry, a request for the SOC service mode; and
   in response to receiving the request for the SOC service mode:
      detecting each coupled battery of the plurality of batteries coupled to a battery interface circuit of the plurality of battery interface circuits; and
      for each detected coupled battery:
         determining, by the processing circuitry, an SOC of the coupled battery;
         determining, by the processing circuitry, whether the SOC of the coupled battery is outside the target SOC; and
         regulating, by the processing circuitry, the SOC of the coupled battery to the target SOC, in response to the determined SOC of the coupled battery being outside the target SOC.
Example 19: A computer program product comprising program code for performing, when executed by the processing circuitry, the method of Example 18.
Example 20: A non-transitory computer-readable storage medium comprising instructions, which, when executed by the processing circuitry, cause the processing circuitry to perform the method of Example 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An on-board battery management system (BMS) in an electric vehicle (EV), the on-board BMS comprising processing circuitry configured to:
regulate energy discharged from an electric vehicle (EV) battery to at least one electric motor in an EV, the EV battery comprising a plurality of battery interface circuits connected in parallel and each configured to be coupled to a battery of a plurality of batteries;
store a target state-of-charge (SOC) for an SOC service mode in the EV based on a true maximum SOC of the EV battery;
receive a request for the SOC service mode; and
in response to the SOC service mode:
detect each coupled battery of the plurality of batteries coupled to a battery interface circuit of the plurality of battery interface circuits; and
for each detected coupled battery:
determine an SOC of the coupled battery;
determine the SOC of the coupled battery outside the target SOC; and
in response to the SOC of the coupled battery outside the target SOC:
regulate the SOC of the coupled battery to the target SOC.

2. The on-board BMS of claim 1, wherein the processing circuitry is further configured to:
receive a request for a battery charging mode in the EV; and
in response to receiving the request for the battery charging mode:
charge the EV battery from power received from an external charging station to the target SOC based on a perceived maximum SOC for the EV battery less than the true maximum SOC.

3. The on-board BMS of any of claims 1-2, wherein the plurality of batteries comprises a plurality of battery packs connected in parallel.

4. The on-board BMS of any of claims 1-2, wherein the plurality of batteries comprises a plurality of battery strings connected in parallel, wherein each battery string of the plurality of battery strings comprises a plurality of battery packs connected in series.

5. The on-board BMS of any of claims 1-4, wherein the processing circuitry is configured to, in response to the SOC service mode, for each coupled battery:
determine the SOC of the coupled battery outside the target SOC by being configured to determine the SOC below the target SOC; and
in response to determining the SOC of the coupled battery below the target SOC:
charge the coupled battery to be within the target SOC from power from an external charging station coupled to the EV.

6. The on-board BMS of any of claims 1-5, wherein the processing circuitry is configured to, in response to the SOC service mode, for each coupled battery:
determine the SOC of the coupled battery outside the target SOC by being configured to determine the SOC is above the target SOC; and
in response to determining the SOC of the coupled battery above the target SOC:
discharge the coupled battery to be within the target SOC.

7. The on-board BMS of claim 6, wherein the processing circuitry is configured to, in response to the SOC service mode, for each coupled battery:
discharge the coupled battery to be within the target SOC by activating one or more power consuming devices in the EV.

8. The on-board BMS of any of claims 1-7, wherein in response to the SOC service mode, for each coupled battery, the processing circuitry is:
further configured to sense open circuit voltage of the coupled battery; and
configured to determine the SOC of the coupled battery based on the open circuit voltage at the battery interface circuit coupled to the coupled battery.

9. The on-board BMS of claim 8, wherein the processing circuitry is further configured to, in response to the SOC service mode, for each coupled battery:
determine whether there is an instability in the sensed open circuit voltage of the coupled battery; and
in response to determining an instability in the sensed open circuit voltage of the coupled battery:
reduce a regulation rate of the regulation of the SOC of the battery to the target SOC.

10. The on-board BMS of claim 9, wherein the processing circuitry is configured to, in response to the SOC service mode, for each coupled battery:
determine the SOC of the coupled battery outside the target SOC by being configured to determine the SOC below the target SOC;
in response to determining the SOC of the coupled battery is below the target SOC:
charge the coupled battery to be within the target SOC; and
in response to determining the instability in the sensed open circuit voltage of the coupled battery:
reduce a charge rate of the charge of the coupled battery to be within the target SOC.

11. The on-board BMS of any of claims 9-10, wherein the processing circuitry is configured to, in response to the SOC service mode, for each coupled battery:
determine the SOC of the coupled battery is outside the target SOC by being configured to determine the SOC above the target SOC;
in response to determining the SOC of the coupled battery above the target SOC: discharge the coupled battery to be within the target SOC; and
in response to determining the instability in the sensed open circuit voltage of the coupled battery:
reduce a discharge rate of the discharge of the coupled battery to be within the target SOC.

12. The on-board BMS of claim 4, wherein the processing circuitry is further configured to, in response to the SOC service mode, for each coupled battery:
determine one or more battery packs among the plurality of battery packs in a coupled battery string have one or more defective battery cells; and
in response to determining the coupled battery string has one or more battery packs that have one or more defective battery cells:
decouple the one or more battery packs from the coupled battery string with the other battery packs of the plurality of battery packs connected in series; and
reduce a regulation voltage used to regulate the SOC of the coupled battery to the target SOC based on a reduced battery capacity of the coupled battery string from the decoupled one or more battery packs from the coupled battery string.

13. The on-board BMS of claim 12, wherein the processing circuitry is configured to reduce the regulation voltage by being configured to reduce a regulation voltage used to regulate the SOC of the coupled battery to the target SOC proportional to the reduced battery capacity of the coupled battery string from the decoupled one or more battery packs from the coupled battery string.

14. A vehicle comprising the on-board battery management system (BMS) of any of claims 1-13.

15. A computer-implemented method of a processing circuitry in an on-board battery management system (BMS) in an electric vehicle (EV) managing a state-of-charge (SOC) in an EV battery comprising a plurality of battery interface circuits connected in parallel and each configured to be coupled to a battery of a plurality of batteries, comprising:
regulating energy, by the processing circuitry, discharged from the EV battery to at least one electric motor in the EV;
storing, by the processing circuitry, a target state-of-charge (SOC) for an SOC service mode in the EV based on a true maximum SOC of the EV battery;
receiving, by the processing circuitry, a request for the SOC service mode; and
in response to receiving the request for the SOC service mode:
detecting each coupled battery of the plurality of batteries coupled to a battery interface circuit of the plurality of battery interface circuits; and
for each detected coupled battery:
determining, by the processing circuitry, an SOC of the coupled battery;
determining, by the processing circuitry, whether the SOC of the coupled battery is outside the target SOC; and
regulating, by the processing circuitry, the SOC of the coupled battery to the target SOC, in response to the determined SOC of the coupled battery being outside the target SOC.
